# EUROPEAN PATENT SPECIFICATION

(11) **EP 4 383 251 B1**
(45) Date of publication and mention of the grant of the patent: **17.09.2025**
(21) Application number: 22887428.5
(22) Date of filing: 13.10.2022
(51) Int. Cl.: G10L 15/22, G10L 17/24, G10L 15/04, G10L 17/06, G06F 21/32, G06F 21/62, G06F 21/60, G06F 21/44, H04W 12/06, H04W 12/50, H04W 60/00, G10L 17/22, H04L 9/40

(54) **ELECTRONIC APPARATUS AND OPERATING METHOD THEREFOR**
ELEKTRONISCHE VORRICHTUNG UND BETRIEBSVERFAHREN DAFÜR
APPAREIL ÉLECTRONIQUE ET SON PROCÉDÉ DE FONCTIONNEMENT

(30) Priority: 25.10.2021 KR 20210142937
(43) Date of publication of application: 12.06.2024
(73) Proprietor: Samsung Electronics Co., Ltd., Suwon-si, Gyeonggi-do 16677 (KR)
(72) Inventor: RYU, Cheol, Suwon-si Gyeonggi-do 16677 (KR); KIM, Joohwan, Suwon-si Gyeonggi-do 16677 (KR); SONG, Gajin, Suwon-si Gyeonggi-do 16677 (KR); SHIN, Hoseon, Suwon-si Gyeonggi-do 16677 (KR); RYU, Kihyuck, Suwon-si Gyeonggi-do 16677 (KR); CHUN, Seunghyo, Suwon-si Gyeonggi-do 16677 (KR)
(74) Representative: Nederlandsch Octrooibureau
(86) International application number: PCT/KR2022/015499
(87) International publication number: WO 2023/075225

(56) References cited:
- EP-A1- 1 298 644
- KR-A- 20160 109 245
- KR-A- 20200 016 547
- KR-A- 20200 019 507
- US-A1- 2010 265 894
- US-A1- 2020 051 572
- US-A1- 2020 059 522
- US-B2- 10 978 044

## Description

### [Technical Field]

The disclosure relates to an electronic device for registering an external electronic device to an external server based on speech recognition, and an operating method thereof.

### [Background Art]

A cloud service, through which a server may store a variety of content and a user terminal such as a smart phone may download content from the server anytime anywhere, has been provided with the development of a communication technology.

In the meantime, a plurality of electronic devices that are present at home may be connected to each other as bidirectional communication becomes possible, and a service for integrally managing and controlling the plurality of electronic devices in one electronic device is provided. To provide such the service, the plurality of electronic devices may need to be registered with the same account.

US 10 978 044 B2, US 2020/051572 A1 and US 2020/059522 A1 disclose prior art relating to device registration.

### [Disclosure]

### [Technical Problem]

To register an unregistered electronic device in a server using a registered electronic device, there may be several steps in which the registered electronic device searches for an electronic device to be registered, selects and connects to one of the found electronic devices, authenticates the connected electronic device, and registers the authenticated electronic device in the server. To perform an operation in each step or to enter the next step, the registered electronic device and the electronic device to be registered need to receive various user inputs (e.g., touch inputs or physical button inputs) for each step. In this case, a registration procedure may be long and complicated, and an erroneous input may be entered in a procedure of receiving a plurality of user inputs.

Embodiments of the disclosure provide an electronic device capable of performing operations of a registration procedure based on a user utterance, in registering an unregistered electronic device in a server, and an operating method thereof.

### [Technical Solution]

According to an example embodiment, an electronic device may include: a microphone, a communication circuit, a memory, and a processor operatively connected to the microphone, the communication circuit, and the memory. The memory may store one or more instructions that, when executed, cause the processor to: receive an utterance through the microphone, execute a function to detect a signal received from at least one external electronic device based on the utterance, identify the at least one external electronic device based on the signal, determine an external electronic device to be registered from among the at least one external electronic device based on device information included in the signal and device information extracted from the utterance, authenticate the external electronic device to be registered, using voiceprint analysis on the utterance, and register the authenticated external electronic device in an external server.

According to an example embodiment, a method of an electronic device may include receiving an utterance, executing a function to detect a signal received from at least one external electronic device based on the utterance, identifying the at least one external electronic device based on the signal, determining an external electronic device to be registered from among the at least one external electronic device based on device information included in the signal and device information extracted from the utterance, authenticating the external electronic device to be registered, using voiceprint analysis on the utterance, and registering the authenticated external electronic device in an external server.

### [ Advantageous Effects]

According to various example embodiments, it is possible to provide an electronic device capable of performing operations of a registration procedure based on a received user utterance, in registering an unregistered electronic device in a server, and an operating method thereof.

According to various example embodiments, a registration process may be simplified and user convenience may be improved by registering an unregistered electronic device using an electronic device registered without requiring receiving an individual user input (e.g., a touch input or a physical button input) for each operation.

Besides, a variety of effects directly or indirectly understood through the disclosure may be provided.

### [Description of Drawings]

The above and other aspects, features and advantages of certain embodiments of the present disclosure will be more apparent from the following detailed description, taken in conjunction with the accompanying drawings, in which:
FIG. 1 is a block diagram illustrating an example electronic device in a network environment, according to various embodiments;
FIG. 2 is a block diagram illustrating an example configuration of an integrated intelligence system, according to various embodiments;
FIG. 3 is a diagram illustrating an example form in which relationship information between a concept and an action is stored in a database, according to various embodiments;
FIG. 4 is a diagram illustrating a user terminal displaying a screen of processing a voice input received through an intelligence app, according to various embodiments;
FIG. 5 is a diagram illustrating a device registration system, according to various embodiments;
FIG. 6 is a block diagram illustrating an example configuration of a device registration system, according to various embodiments;
FIG. 7A is a signal flow diagram illustrating an example operation of searching for an electronic device to be registered based on a user utterance of a device registration system, according to various embodiments;
FIG. 7B is a signal flow diagram illustrating an example operation of searching for an electronic device to be registered based on a user utterance of a device registration system, according to various embodiments;
FIG. 8 is a signal flow diagram illustrating an example operation of connecting a registered electronic device to an electronic device to be registered in a device registration system, according to various embodiments;
FIG. 9 is a signal flow diagram illustrating an example operation of connecting a registered electronic device to an electronic device to be registered in a device registration system, according to various embodiments;
FIG. 10 is a signal flow diagram illustrating an example operation of authenticating and registering an electronic device to be registered in a device registration system, according to various embodiments;
FIG. 11 is a signal flow diagram illustrating an example operation of authenticating and registering an electronic device to be registered in a device registration system, according to various embodiments;
FIG. 12 is a diagram illustrating an example user interface provided by a device registration system, according to various embodiments; and
FIG. 13 is a flowchart illustrating an example operation of an electronic device, according to various embodiments.

With regard to description of drawings, the same or similar components may be marked by the same or similar reference signs.

### [Mode for Invention]

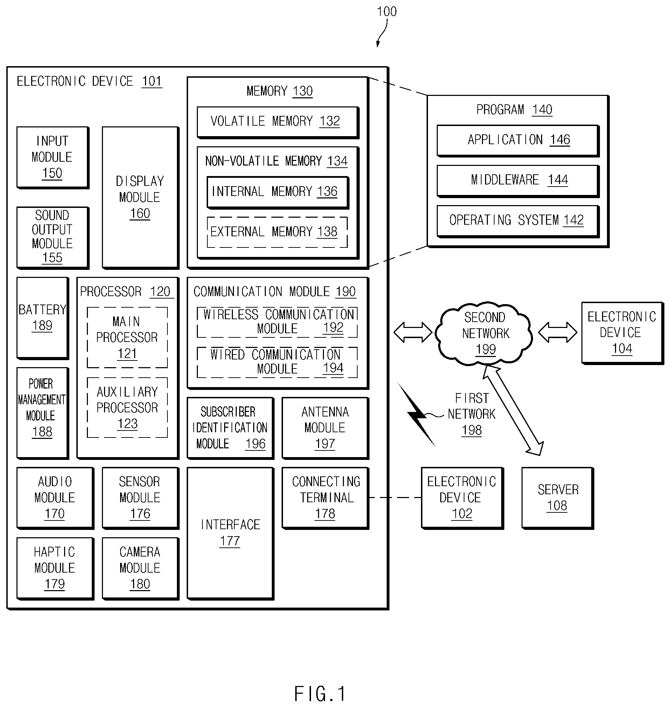

FIG. 1 is a block diagram illustrating an example electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In various embodiments, at least one of the components (e.g., the connecting terminal 178) may be omitted from the electronic device 101, or one or more other components may be added in the electronic device 101. In various embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

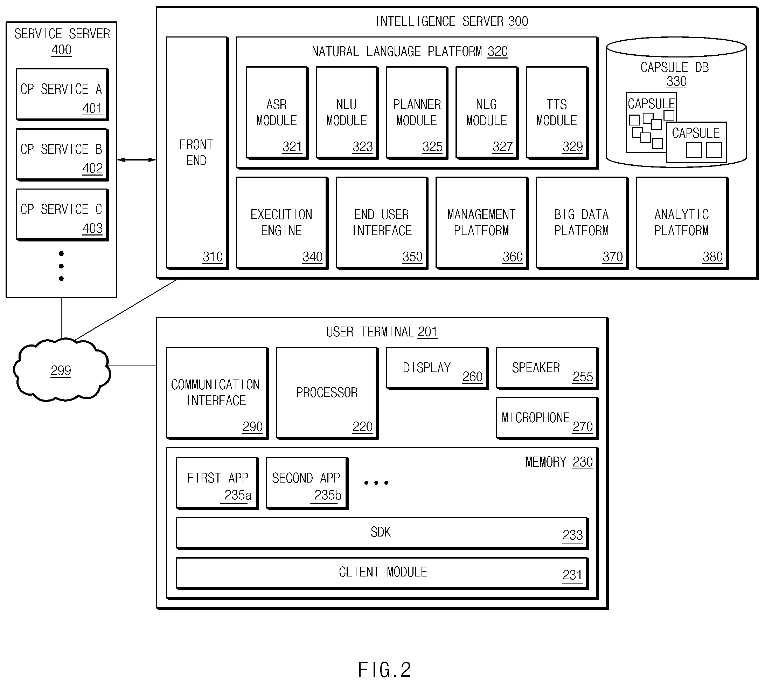

FIG. 2 is a block diagram illustrating an example configuration of an integrated intelligence system, according to various embodiments.

Referring to FIG. 2, an integrated intelligence system according to an embodiment may include a user terminal 201, an intelligence server 300, and a service server 400.

The user terminal 201 (e.g., the electronic device 101 of FIG. 1) according to an embodiment may be a terminal device (or an electronic device) capable of connecting to the Internet, and may be, for example, a mobile phone, a smartphone, a personal digital assistant (PDA), a notebook computer, a television (TV), a household appliance, a wearable device, a head mounted display (HMD), or a smart speaker.

According to the illustrated embodiment, the user terminal 201 may include a communication interface (e.g., including communication circuitry) 290, a microphone 270, a speaker 255, a display 260, a memory 230, and/or a processor (e.g., including processing circuity) 220. The listed components may be operatively or electrically connected to one another.

The communication interface 290 (e.g., the communication module 190 of FIG. 1) may be connected to an external device and may be configured to transmit or receive data to or from the external device. The microphone 270 (e.g., the audio module 170 of FIG. 1) may receive a sound (e.g., a user utterance) to convert the sound into an electrical signal. The speaker 255 (e.g., the sound output module 155 of FIG. 1) may output the electrical signal as sound (e.g., voice). The display 260 (e.g., the display module 160 of FIG. 1) may be configured to display an image or video. The display 260 according to an embodiment may display the graphic user interface (GUI) of the running app (or an application program).

The memory 230 (e.g., the memory 130 of FIG. 1) according to an embodiment may store a client module 231, a software development kit (SDK) 233, and a plurality of applications. The client module 231 and the SDK 233 may form a framework (or a solution program) for performing general-purposed functions. Furthermore, the client module 231 or the SDK 233 may include the framework for processing a voice input.

The plurality of applications (e.g., 235a and 235b) may be programs for performing a specified function. According to an embodiment, the plurality of applications may include a first app 235a and/or a second app 235b. According to an embodiment, each of the plurality of applications may include a plurality of actions for performing a specified function. For example, the applications may include an alarm app, a message app, and/or a schedule app. According to an embodiment, the plurality of applications may be executed by the processor 220 to sequentially execute at least part of the plurality of actions.

According to an embodiment, the processor 220 may control overall operations of the user terminal 201. For example, the processor 220 may be electrically connected to the communication interface 290, the microphone 270, the speaker 255, and the display 260 to perform a specified operation. For example, the processor 220 may include at least one processor.

Moreover, the processor 220 according to an embodiment may execute the program stored in the memory 230 so as to perform a specified function. For example, according to an embodiment, the processor 220 may execute at least one of the client module 231 or the SDK 233 so as to perform a following operation for processing a voice input. The processor 220 may control operations of the plurality of applications via the SDK 233. The following actions described as the actions of the client module 231 or the SDK 233 may be the actions performed by the execution of the processor 220.

According to an embodiment, the client module 231 may receive a voice input. For example, the client module 231 may receive a voice signal corresponding to a user utterance detected through the microphone 270. The client module 231 may transmit the received voice input (e.g., a voice input) to the intelligence server 300. The client module 231 may transmit state information of the user terminal 201 to the intelligence server 300 together with the received voice input. For example, the state information may be execution state information of an app.

According to an embodiment, the client module 231 may receive a result corresponding to the received voice input from the intelligence server 300. For example, when the intelligence server 300 is capable of calculating the result corresponding to the received voice input, the client module 231 may receive the result corresponding to the received voice input. The client module 231 may display the received result on the display 260.

According to an embodiment, the client module 231 may receive a plan corresponding to the received voice input. The client module 231 may display, on the display 260, a result of executing a plurality of actions of an app depending on the plan. For example, the client module 231 may sequentially display the result of executing the plurality of actions on a display. As another example, the user terminal 201 may display only a part of results (e.g., a result of the last action) of executing the plurality of actions, on the display.

According to an embodiment, the client module 231 may receive a request for obtaining information necessary to calculate the result corresponding to a voice input, from the intelligence server 300. According to an embodiment, the client module 231 may transmit the necessary information to the intelligence server 300 in response to the request.

According to an embodiment, the client module 231 may transmit, to the intelligence server 300, information about the result of executing a plurality of actions depending on the plan. The intelligence server 300 may identify that the received voice input is correctly processed, using the result information.

According to an embodiment, the client module 231 may include a speech recognition module. According to an embodiment, the client module 231 may recognize a voice input for performing a limited function, via the speech recognition module. For example, the client module 231 may launch an intelligence app for processing a specific voice input by performing an organic action, in response to a specified voice input (e.g., wake up!).

According to an embodiment, the intelligence server 300 may receive information associated with a user's voice input from the user terminal 201 over a network 299 (e.g., the first network 198 and/or the second network 199 of FIG. 1). According to an embodiment, the intelligence server 300 may convert data associated with the received voice input to text data. According to an embodiment, the intelligence server 300 may generate at least one plan for performing a task corresponding to the user's voice input, based on the text data.

According to an embodiment, the plan may be generated by an artificial intelligent (AI) system. The AI system may be a rule-based system, or may be a neural network-based system (e.g., a feedforward neural network (FNN) and/or a recurrent neural network (RNN)). Alternatively, the AI system may be a combination of the above-described systems or an AI system different from the above-described system. According to an embodiment, the plan may be selected from a set of predefined plans or may be generated in real time in response to a user's request. For example, the AI system may select at least one plan of the plurality of predefined plans.

According to an embodiment, the intelligence server 300 may transmit a result according to the generated plan to the user terminal 201 or may transmit the generated plan to the user terminal 201. According to an embodiment, the user terminal 201 may display the result according to the plan on a display. According to an embodiment, the user terminal 201 may display a result of executing the action according to the plan on the display.

The intelligence server 300 according to an embodiment may include a front end 310, a natural language platform 320, a capsule database 330, an execution engine 340, an end user interface 350, a management platform 360, a big data platform 370, or an analytic platform 380.

The front end 310 according to an embodiment may receive a voice input received by the user terminal 201 from the user terminal 201. The front end 310 may transmit a response corresponding to the voice input to the user terminal 201.

According to an embodiment, the natural language platform 320 may include an automatic speech recognition (ASR) module 321, a natural language understanding (NLU) module 323, a planner module 325, a natural language generator (NLG) module 327, and/or a text to speech module (TTS) module 329. Each of the various modules may include various processing circuitry and/or executable program instructions.

According to an embodiment, the ASR module 321 may convert the voice input received from the user terminal 201 into text data. According to an embodiment, the NLU module 323 may grasp the intent of the user using the text data of the voice input. For example, the NLU module 323 may grasp the intent of the user by performing syntactic analysis and/or semantic analysis. According to an embodiment, the NLU module 323 may grasp the meaning of words extracted from the voice input using linguistic features (e.g., syntactic elements) such as morphemes or phrases and may determine the intent of the user by matching the grasped meaning of the words to the intent.

According to an embodiment, the planner module 325 may generate the plan using a parameter and the intent that is determined by the NLU module 323. According to an embodiment, the planner module 325 may determine a plurality of domains necessary to perform a task, based on the determined intent. The planner module 325 may determine a plurality of actions included in each of the plurality of domains determined based on the intent. According to an embodiment, the planner module 325 may determine the parameter necessary to perform the determined plurality of actions or a result value output by the execution of the plurality of actions. The parameter and the result value may be defined as a concept of a specified form (or class). As such, the plan may include the plurality of actions and/or a plurality of concepts, which are determined by the intent of the user. The planner module 325 may determine the relationship between the plurality of actions and the plurality of concepts stepwise (or hierarchically). For example, the planner module 325 may determine the execution sequence of the plurality of actions, which are determined based on the user's intent, based on the plurality of concepts. In other words, the planner module 325 may determine an execution sequence of the plurality of actions, based on the parameters necessary to perform the plurality of actions and the result output by the execution of the plurality of actions. Accordingly, the planner module 325 may generate a plan including information (e.g., ontology) about the relationship between the plurality of actions and the plurality of concepts. The planner module 325 may generate the plan using information stored in the capsule DB 330 storing a set of relationships between concepts and actions.

According to an embodiment, the NLG module 327 may change specified information into information in a text form. The information changed to the text form may be in the form of a natural language speech. The TTS module 329 according to an embodiment may change information in the text form to information in a voice form.

According to an embodiment, all or part of the functions of the natural language platform 320 may be also implemented in the user terminal 201. For example, the user terminal 201 may include an ASR module and/or an NLU module. The user terminal 201 may recognize the user's voice command and then may transmit text information corresponding to the recognized voice command to the intelligence server 300. For example, the user terminal 201 may include a TTS module. The user terminal 201 may receive text information from the intelligence server 300 and may output the received text information using voice.

The capsule DB 330 may store information about the relationship between the actions and the plurality of concepts corresponding to a plurality of domains. According to an embodiment, the capsule may include a plurality of action objects (or action information) and/or concept objects (or concept information) included in the plan. According to an embodiment, the capsule DB 330 may store the plurality of capsules in a form of a concept action network (CAN). According to an embodiment, the plurality of capsules may be stored in the function registry included in the capsule DB 330.

The capsule DB 330 may include a strategy registry that stores strategy information necessary to determine a plan corresponding to a voice input. When there are a plurality of plans corresponding to the voice input, the strategy information may include reference information for determining one plan. According to an embodiment, the capsule DB 330 may include a follow-up registry that stores information of the follow-up action for suggesting a follow-up action to the user in a specified context. For example, the follow-up action may include a follow-up utterance. According to an embodiment, the capsule DB 330 may include a layout registry storing layout information of information output via the user terminal 201. According to an embodiment, the capsule DB 330 may include a vocabulary registry storing vocabulary information included in capsule information. According to an embodiment, the capsule DB 330 may include a dialog registry storing information about dialog (or interaction) with the user. The capsule DB 330 may update an object stored via a developer tool. For example, the developer tool may include a function editor for updating an action object or a concept object. The developer tool may include a vocabulary editor for updating a vocabulary. The developer tool may include a strategy editor that generates and registers a strategy for determining the plan. The developer tool may include a dialog editor that creates a dialog with the user. The developer tool may include a follow-up editor capable of activating a follow-up target and editing the follow-up utterance for providing a hint. The follow-up target may be determined based on a target, the user's preference, or an environment condition, which is currently set. According to an embodiment, the capsule DB 330 may be implemented in the user terminal 201.

According to an embodiment, the execution engine 340 may calculate a result using the generated plan. The end user interface 350 may transmit the calculated result to the user terminal 201. Accordingly, the user terminal 201 may receive the result and may provide the user with the received result. According to an embodiment, the management platform 360 may manage information used by the intelligence server 300. According to an embodiment, the big data platform 370 may collect data of the user. According to an embodiment, the analytic platform 380 may manage quality of service (QoS) of the intelligence server 300. For example, the analytic platform 380 may manage the component and processing speed (or efficiency) of the intelligence server 300.

According to an embodiment, the service server 400 may provide the user terminal 201 with a specified service (e.g., ordering food or booking a hotel). According to an embodiment, the service server 400 may be a server operated by the third party. According to an embodiment, the service server 400 may provide the intelligence server 300 with information for generating a plan corresponding to the received voice input. The provided information may be stored in the capsule DB 330. Furthermore, the service server 400 may provide the intelligence server 300 with result information according to the plan. The service server 400 may communicate with the intelligence server 300 and/or the user terminal 201 over the network 299. The service server 400 may communicate with the intelligence server 300 through a separate connection. An example is illustrated in FIG. 2 that the service server 400 is one server, but embodiments of the disclosure are not limited thereto. At least one of the respective services 401, 402, and 403 of the service server 400 may be implemented with a separate server.

In the above-described integrated intelligence system, the user terminal 201 may provide the user with various intelligent services in response to a user input. The user input may include, for example, an input through a physical button, a touch input, or a voice input.

According to an embodiment, the user terminal 201 may provide a speech recognition service via an intelligence app (or a speech recognition app) stored therein. In this case, for example, the user terminal 201 may recognize a user utterance or a voice input, which is received via the microphone, and may provide the user with a service corresponding to the recognized voice input.

According to an embodiment, the user terminal 201 may perform a specified action, based on the received voice input, independently, or together with the intelligence server and/or the service server. For example, the user terminal 201 may launch an app corresponding to the received voice input and may perform the specified action via the executed app.

In an embodiment, when providing a service together with the intelligence server 300 and/or the service server, the user terminal 201 may detect a user utterance using the microphone 270 and may generate a signal (or voice data) corresponding to the detected user utterance. The user terminal may transmit the voice data to the intelligence server 300 using the communication interface 290.

According to an embodiment, the intelligence server 300 may generate a plan for performing a task corresponding to the voice input or the result of performing an action depending on the plan, as a response to the voice input received from the user terminal 201. For example, the plan may include a plurality of actions for performing the task corresponding to the voice input of the user and/or a plurality of concepts associated with the plurality of actions. The concept may define a parameter to be entered upon executing the plurality of actions or a result value output by the execution of the plurality of actions. The plan may include relationship information between the plurality of actions and the plurality of concepts.

According to an embodiment, the user terminal 201 may receive the response using the communication interface 290. The user terminal 201 may output the voice signal generated in the user terminal 201 to the outside using the speaker 255 or may output an image generated in the user terminal 201 to the outside using the display 260.

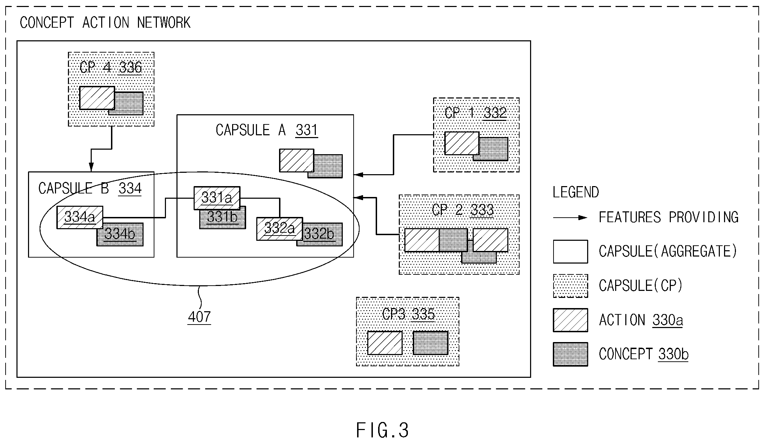

FIG. 3 is a diagram illustrating an example format in which relationship information between a concept and an action is stored in a database, according to various embodiments.

A capsule database (e.g., the capsule DB 330) of the intelligence server 300 may store a capsule in the form of a CAN. The capsule DB may store an action for processing a task corresponding to a user's voice input and a parameter necessary for the action, in the CAN form.

The capsule DB may store a plurality capsules (a capsule A 331 and a capsule B 334) respectively corresponding to a plurality of domains (e.g., applications). According to an embodiment, a single capsule (e.g., the capsule A 331) may correspond to a single domain (e.g., a location (geo) or an application). In addition, one capsule may correspond to a capsule (e.g., CP 1 332, CP 2 333, CP 3 335, and/or CP 4 336) of at least one service provider for performing a function for a domain associated with a capsule. According to an embodiment, the one capsule may include at least one or more actions 330a and at least one or more concepts 330b for performing a specified function.

The natural language platform 320 may generate a plan for performing a task corresponding to the received voice input using the capsule stored in the capsule DB 330. For example, the planner module 325 of the natural language platform may generate the plan using the capsule stored in the capsule database. For example, a plan 407 may be generated using actions 331a and 332a and concepts 331b and 332b of the capsule A 331 and an action 334a and a concept 334b of the capsule B 334.

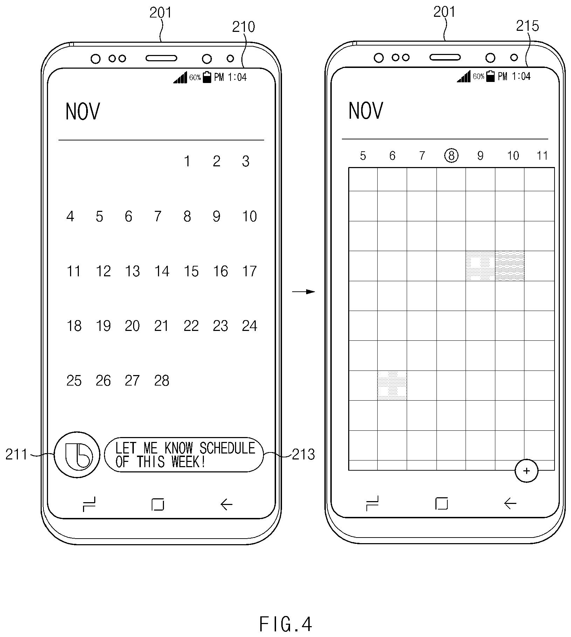

FIG. 4 is a diagram illustrating an example screen in which a user terminal processes a voice input received through an intelligence app, according to various embodiments.

The user terminal 201 may execute an intelligence app to process a user input through the intelligence server 300.

According to an embodiment, on first screen 210, when recognizing a specified voice input (e.g., wake up!) or receiving an input via a hardware key (e.g., a dedicated hardware key), the user terminal 201 may launch an intelligence app for processing a voice input. For example, the user terminal 201 may launch the intelligence app in a state where a schedule app is executed. According to an embodiment, the user terminal 201 may display an object (e.g., an icon) 211 corresponding to the intelligence app, on the display 260. According to an embodiment, the user terminal 201 may receive a voice input by a user utterance. For example, the user terminal 201 may receive a voice input saying that "let me know the schedule of this week!". According to an embodiment, the user terminal 201 may display a user interface (UI) 213 (e.g., an input window) of the intelligence app, in which text data of the received voice input is displayed, on a display.

According to an embodiment, on second screen 215, the user terminal 201 may display a result corresponding to the received voice input, on the display. For example, the user terminal 201 may receive a plan corresponding to the received user input and may display "the schedule of this week" on the display depending on the plan.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

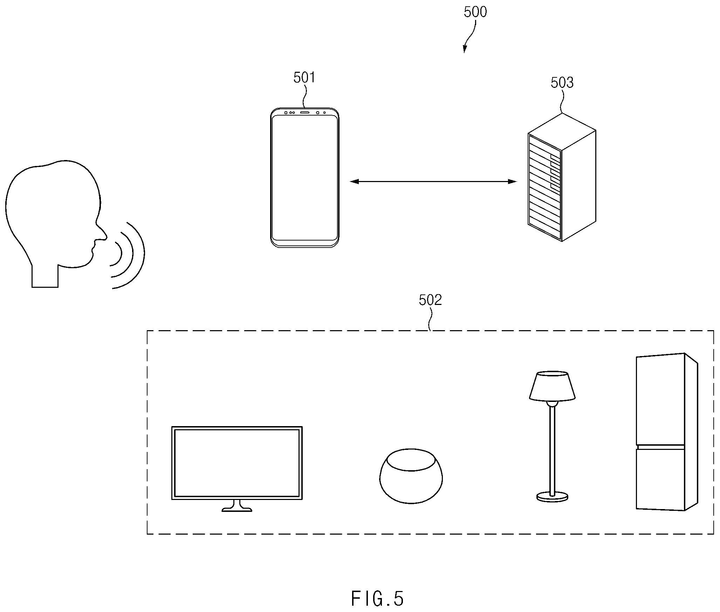

A device registration system according to various embodiments will be described in greater detail below with reference to FIG. 5.

FIG. 5 is a diagram 500 illustrating an example configuration of a device registration system, according to various embodiments.

Referring to FIG. 5, a device registration system according to an embodiment may include an electronic device 501 (e.g., the electronic device 101 of FIG. 1 or the user terminal 201 of FIG. 2), an external server 503 (e.g., the server 108 of FIG. 1 or the service server 400 of FIG. 2), and the at least one external electronic device 502 (e.g., the electronic device 102 or the electronic device 104 of FIG. 1). For example, the electronic device 501 may be a smart phone, a tablet PC, a notebook computer, a desktop computer, or a wearable device. For example, the at least one electronic device 502 may include a TV, smart speaker, smart lighting, or white goods. According to an embodiment, the electronic device 501 may be an electronic device registered in the external server 503, and may be an electronic device connected to the external server 503 over a wireless communication network. According to an embodiment, the at least one external electronic device 502 may be an electronic device not registered in the external server 503, and may be an electronic device that is not connected to the external server 503 over a network.

According to an embodiment, the electronic device 501 and the at least one external electronic device 502 may receive a user utterance. According to an embodiment, the user utterance may include a wake up word for executing a speech recognition function of the electronic device 501 or the at least one external electronic device 502. According to an embodiment, the electronic device 501 and the at least one external electronic device 502 may execute (or activate) the speech recognition function in response to an utterance of a wake up word.

According to an embodiment, the user utterance may include a keyword for registering the at least one external electronic device 502. For example, the keyword may include "registration" or "connection". According to an embodiment, the electronic device 501 and the at least one external electronic device 502 may determine whether the user utterance includes the keyword for registering the at least one external electronic device 502, using the speech recognition function. According to an embodiment, as it is determined that the user utterance includes the keyword for registering the at least one external electronic device 502, the electronic device 501 may execute a function to detect a signal received from a peripheral electronic device. According to an embodiment, as the at least one external electronic device 502 determines that the user utterance includes the keyword for registering the at least one external electronic device 502, the at least one external electronic device 502 may broadcast a signal to the peripheral electronic device. For example, the signal may include information (e.g., service set identifier (SSID)) for identifying the at least one external electronic device 502. According to an embodiment, the electronic device 501 may receive the broadcast signal from the at least one external electronic device 502.

According to an embodiment, speech recognition functions of the electronic device 501 and the at least one external electronic device 502 may be implemented with an on-device. For example, at least some modules (or functions) (e.g., the ASR module 321 or the NLU module 323) of the intelligence server 300 of FIG. 2 may be implemented in each of the electronic device 501 and the at least one external electronic device 502. According to various embodiments, the electronic device 501 may support the speech recognition function by communicating with the intelligence server 300 over a wireless communication network.

According to an embodiment, the electronic device 501 may determine an external electronic device to be registered from among the at least one external electronic device 502 based on device information included in a signal received from the at least one external electronic device 502. For example, the device information may include at least one of a device identifier and a device type. According to an embodiment, the electronic device 501 may determine whether the device type of the at least one external electronic device 502 matches a device type extracted from the user utterance. According to an embodiment, the electronic device 501 may determine whether the at least one external electronic device 502 is included in the device list registered in the external server 503. According to an embodiment, the electronic device 501 may determine that the external electronic device, of which the device type matches a device type extracted from the user utterance and which will registers an external electronic device that is not included in the device list registered in the external server 503, from among the at least one external electronic device 502 is an external electronic device to be registered. According to an embodiment, when it is impossible to extract a device type from a user utterance, the electronic device 501 may determine that an external electronic device, which is not included in the device list registered in the external server 503, from among the at least one external electronic device 502, is an external electronic device to be registered, regardless of the device type of the at least one external electronic device 502. For example, when the user utterance is an utterance, which does not specify a device type, such as "please register" or "please connect", the electronic device 501 may not extract the device type from the user utterance.

According to an embodiment, when there are a plurality of external electronic devices that are not included in the device list registered in the external server 503 among the at least one external electronic device 502, the electronic device 501 may calculate the priority of a connection between the plurality of external electronic devices. According to an embodiment, the electronic device 501 may calculate the priority of the connection between the plurality of external electronic devices based on at least part of the quality (e.g., at least one of reference signal received power (RSRP), reference signal received quality (RSRQ), received signal strength indicator (RSSI), or signal to interference plus noise ratio (SINR)) of a broadcast signal, which includes the strength of broadcast signals received from a plurality of external electronic devices, the arrival order of broadcast signals received from the plurality of external electronic devices, a confidence score associated with the recognition of a wake up word of the plurality of external electronic devices, or a user input (e.g., a user utterance and/or a user touch input) indicating one of the plurality of external electronic devices. For example, the electronic device 501 may determine that the external electronic device having the highest connection priority is an external electronic device to be finally registered. The electronic device 501 may connect to the external electronic device having the highest priority through short-range wireless communication. For example, the short-range wireless communication may include device-to-device (D2D) communication such as WiFi Direct or Bluetooth pairing. As another example, the electronic device 501 may sequentially connect to the plurality of external electronic devices depending on the connection priority.

According to an embodiment, the electronic device 501 may authenticate an external electronic device connected to the electronic device 501 using voiceprint analysis. According to an embodiment, the electronic device 501 may determine whether a voiceprint specified from a user utterance received by the electronic device 501 matches a voiceprint specified from a user utterance received by the external electronic device. According to an embodiment, when the two voiceprints match each other, the electronic device 501 may determine that the electronic device 501 and an external electronic device connected to the electronic device 501 receive the same user's voice command, and may authenticate the external electronic device. According to an embodiment, when the two voiceprints do not match each other, the electronic device 501 may determine that the electronic device 501 and the external electronic device connected to the electronic device 501 do not receive the same user's voice command, and may fail to authenticate the external electronic device.

According to an embodiment, the electronic device 501 may register the authenticated external electronic device in the external server 503. According to an embodiment, when a voiceprint specified from a user utterance received by the electronic device 501 matches a voiceprint specified from a user utterance received by an external electronic device, and the user utterance received by the electronic device 501 and the user utterance received by the external electronic device are utterances for device registration, the electronic device 501 may approve the registration of the external electronic device connected to the electronic device 501. According to an embodiment, the electronic device 501 may transmit encrypted personal information to the external electronic device, of which the registration is approved. According to an embodiment, the external electronic device may connect to a wireless communication network using the encrypted personal information received from the electronic device 501 and may register itself in the external server 503 through the wireless communication network. For example, the encrypted personal information may include information for Internet connection. For example, the encrypted personal information may include at least one of WiFi information and account information for accessing the external server 503. For example, the WiFi information may include a service set identifier (SSID) and a WiFi passphrase of the electronic device 501. According to an embodiment, an external electronic device may transmit its device information (e.g., a serial number or a model code) to the external server 503 through a wireless communication network. According to an embodiment, the electronic device 501 may receive, from the external server 503, the registered device list and device information of each of devices included in the list.

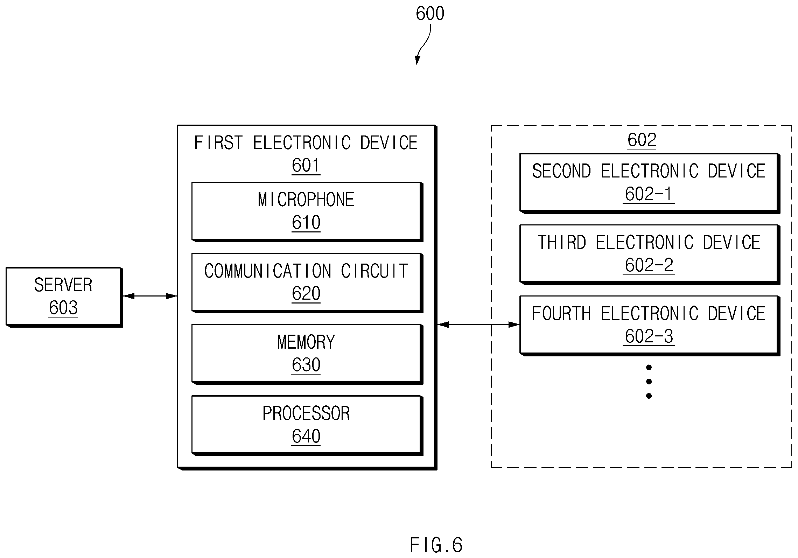

Hereinafter, an example configuration and operation of a device registration system according to various embodiments will be described in greater detail below with reference to FIG. 6.

FIG. 6 is a block diagram 600 illustrating an example configuration of a device registration system, according to various embodiments.

Referring to FIG. 6, a device registration system according to an embodiment may include a first electronic device 601 (e.g., the electronic device 501 of FIG. 5), at least one external electronic device 602 (e.g., the at least one external electronic device 502 of FIG. 5), and a server 603 (e.g., the external server 503 of FIG. 5). For example, the at least one external electronic device 602 may include a second electronic device 602-1, a third electronic device 602-2, and a fourth electronic device 602-3.

According to an embodiment, the first electronic device 601 may include a microphone 610 (e.g., the input module 150 of FIG. 1 or the microphone 270 of FIG. 2), a communication circuit 620 (e.g., the communication module 190 of FIG. 1 or the communication interface 290 of FIG. 2), a memory 630 (e.g., the memory 130 of FIG. 1 or the memory 230 of FIG. 2), and a processor (e.g., including processing circuitry) 640 (e.g., the processor 120 of FIG. 1 or the processor 220 of FIG. 2).

According to an embodiment, the microphone 610 may receive the user's voice input. For example, the microphone 610 may receive a user utterance.

According to an embodiment, the communication circuit 620 may communicate with the server 603 or the at least one external electronic device 602 over a wireless communication network (e.g., the first network 198 or the second network 199 of FIG. 1). According to an embodiment, the communication circuit 620 may communicate with the server 603 through a long-range wireless communication network. For example, the long-range wireless communication network may be the Internet. According to an embodiment, the communication circuit 620 may communicate with the at least one external electronic device 602 through a short-range wireless communication network. For example, the short-range wireless communication network may be WiFi Direct or Bluetooth.

According to an embodiment, the memory 630 may store one or more instructions executed by at least one component (e.g., the processor 640) of the first electronic device 601. According to an embodiment, the memory 630 may store various pieces of data used while instructions are executed. For example, the memory 630 may store a registered device list received from the server 603 and device information of each of the registered devices.

According to an embodiment, the processor 640 may be operatively connected to the microphone 610, the communication circuit 620, and the memory 630. According to an embodiment, the processor 640 may include various processing circuitry and receive a user utterance through the microphone 610. According to an embodiment, the processor 640 may identify a wake up word from the user utterance. According to an embodiment, the processor 640 may execute a speech recognition function by identifying the wake up word. For example, the processor 640 may convert the user utterance received through the microphone 610 into text data, and may grasp the user's intent using the text data of the user utterance. According to an embodiment, an operation of the processor 640 converting a user utterance into text data may correspond to an operation of the ASR module 321 of FIG. 2. According to an embodiment, the operation of the processor 640 grasping the user's intent using the text data of the user utterance may correspond to the operation of the NLU module 323 of FIG. 2. As in the above-described embodiment, the first electronic device 601 may perform speech recognition by itself, but is not limited thereto. According to an embodiment, the first electronic device 601 may transmit a user utterance to an external server (e.g., the intelligence server 300 of FIG. 2), may receive information for performing an operation corresponding to the user utterance from the external server, and may perform the operation corresponding to the user utterance based on the received information.

According to an embodiment, the processor 640 may execute a function (e.g., listening) for detecting a signal received from the at least one external electronic device 602 based on a user utterance. According to an embodiment, the processor 640 may determine whether the user utterance includes a keyword for registering an external electronic device. For example, the keyword for registering an external electronic device may include "registration" or "connection". According to an embodiment, when it is determined that the user utterance includes a keyword for registering an external electronic device, the processor 640 may execute a function to detect a signal received from the at least one external electronic device 602. For example, the processor 640 may detect a signal received from the at least one external electronic device 602 during a specified time (e.g., N seconds (sec)).

Although components of the second electronic device 602-1, the third electronic device 602-2, and the fourth electronic device 602-3 are not shown in FIG. 6, the second electronic device 602-1, the third electronic device 602-2, and the fourth electronic device 602-3 may include at least part (e.g., the input module 150 (e.g., a microphone), the communication module 190 (e.g., a communication circuit) of FIG. 1, or the processor 120) of the components of the electronic device 101 of FIG. 1.

According to an embodiment, the second electronic device 602-1, the third electronic device 602-2, and the fourth electronic device 602-3 may receive a user utterance through a microphone of each electronic device. According to an embodiment, the second electronic device 602-1, the third electronic device 602-2, and the fourth electronic device 602-3 may identify a wake up word from the user utterance. When identifying the wake up word, the second electronic device 602-1, the third electronic device 602-2, and the fourth electronic device 602-3 may execute a speech recognition function. According to an embodiment, without communication with an external server (e.g., the intelligence server 300 of FIG. 2), the second electronic device 602-1, the third electronic device 602-2, and the fourth electronic device 602-3 may convert the user utterance received through a microphone of each electronic device into text data and may identify the intent of the user using the text data of the user utterance.

According to an embodiment, the second electronic device 602-1, the third electronic device 602-2, and the fourth electronic device 602-3 may determine whether a keyword for registering an electronic device (e.g., at least one of the second electronic device 602-1, the third electronic device 602-2, or the fourth electronic device 602-3) is included in the user utterance received through the microphone of each electronic device. For example, the keyword for registering an electronic device may include "registration" or "connection".

According to an embodiment, each of the second electronic device 602-1, the third electronic device 602-2, and the fourth electronic device 602-3 may determine whether it is included in a device indicated by a user utterance, based on device information extracted from a user utterance received through a microphone of the respective electronic device and the device information of the respective electronic device. For example, the device information may include a device type. For example, each of the second electronic device 602-1, the third electronic device 602-2, and the fourth electronic device 602-3 may compare the device type extracted from the user utterance with its own device type. When the device types matches each other, each of the second electronic device 602-1, the third electronic device 602-2, and the fourth electronic device 602-3 may determine that it is included in a device indicated by the user utterance.

According to an embodiment, when it is determined that a user utterance received through a microphone of each electronic device includes a keyword for registering an electronic device of which the device type is the same as a device type of each electronic device, at least one of the second electronic device 602-1, the third electronic device 602-2, or the fourth electronic device 602-3 may broadcast a signal to a peripheral device through a communication circuit of each electronic device. For example, when the second electronic device 602-1 is a refrigerator, the third electronic device 602-2 is a smart speaker, the fourth electronic device 602-3 is a TV, and a user utterance is "register a TV", the user utterance may include a keyword of "register", and the device type extracted from the user utterance may be a 'TV'. Accordingly, the fourth electronic device 602-3 having the same device type as a 'TV' may broadcast a signal to the peripheral device. For example, the fourth electronic device 602-3 may broadcast a signal to the peripheral device during a specified time (e.g., N seconds (sec)).

According to an embodiment, the processor 640 of the first electronic device 601 may detect a signal broadcast from at least one of the second electronic device 602-1, the third electronic device 602-2, and the fourth electronic device 602-3. According to an embodiment, the signal thus broadcast may include identification information (e.g., SSID) of an electronic device transmitting the signal. According to an embodiment, the processor 640 may identify at least one external electronic device (e.g., at least one of the second electronic device 602-1, the third electronic device 602-2, or the fourth electronic device 602-3) transmitting the signal, based on the signal.

According to an embodiment, the signal received from the second electronic device 602-1, the third electronic device 602-2, or the fourth electronic device 602-3 to the first electronic device 601 may include device information of an electronic device transmitting the signal. For example, the device information may include a device type. For example, the device type may include a TV, a speaker, lighting, an air conditioner, or a refrigerator. According to an embodiment, the processor 640 of the first electronic device 601 may determine whether a device type included in the received signal matches a device type extracted from a user utterance. According to an embodiment, when it is determined that the device type included in the received signal matches the device type extracted from the user utterance, the processor 640 may determine whether the electronic device transmitting the signal is a device that is newly registered. According to an embodiment, when it is determined that the device type included in the received signal does not match the device type extracted from the user utterance, the processor 640 may reject a connection request of the electronic device transmitting the signal.

According to an embodiment, the processor 640 may receive the registered device list and device information of the registered device from the server 603 through the communication circuit 620. According to an embodiment, the processor 640 may at least temporarily store the registered device list and device information of the registered device, which are received from the server 603, in the memory 630. According to an embodiment, the server 603 may provide a service for integrally managing and controlling one or more registered electronic devices to the first electronic device 601, which is the registered electronic device, through a wireless communication network (e.g., Internet). For example, the server 603 may be referred to as a cloud.

According to an embodiment, the processor 640 may determine whether at least one external electronic device transmitting the signal is included in the device list registered in the server 603, based on device information of the registered device and device information included in the received signal. For example, when there is device information matching device information included in the received signal from among device information of registered devices, the processor 640 may determine that the external electronic device transmitting the signal is included in the registered device list, and may determine that the external electronic device transmitting the corresponding signal is not a device that is newly registered. For example, when there is no device information matching device information included in the received signal from among device information of registered devices, the processor 640 may determine that the external electronic device transmitting the signal is not included in the registered device list, and may determine that the external electronic device transmitting the corresponding signal is a device that is newly registered. According to an embodiment, the processor 640 may reject a connection request of the external electronic device included in the registered device list. According to an embodiment, the processor 640 may approve a connection request of an external electronic device that is not included in the registered device list.

According to an embodiment, the processor 640 may determine that an external electronic device not included in the registered device list is an external electronic device to be registered. According to an embodiment, when there are a plurality of external electronic devices that are not included in the registered device list, the processor 640 may determine (or calculate) the priority of a connection between the plurality of external electronic devices. According to an embodiment, the processor 640 may establish a communication connection with one of the plurality of external electronic devices based on the connection priority. For example, the first electronic device 601 may be connected to an external electronic device (e.g., the second electronic device 602-1, the third electronic device 602-2, or the fourth electronic device 602-3) through a short-range wireless communication network (e.g., WiFi Direct or Bluetooth).

According to an embodiment, the processor 640 may establish a communication connection with the external electronic device having the highest connection priority. For example, when the second electronic device 602-1, the third electronic device 602-2, and the fourth electronic device 602-3 are not included in the registered device list, and the connection priority of the fourth electronic device 602-3 is highest among the second electronic device 602-1, the third electronic device 602-2, and the fourth electronic device 602-3, the processor 640 may establish a short-range wireless communication connection with the fourth electronic device 602-3 through the communication circuit 620.

In an embodiment, it is described that a device type is extracted from a user utterance, but the disclosure is not limited thereto. For example, when the user utterance is an utterance, which does not specify a device type, such as "please register" or "please connect", the processor 640 may not extract the device type from the user utterance. According to an embodiment, when a device type is not extracted from the user utterance, the processor 640 may omit an operation of determining whether the above-described device type is matched. For example, the processor 640 may determine an external electronic device to be registered, based only on whether at least one external electronic device transmitting a signal to the first electronic device 601 is included in the device list registered in the server 603. For example, the processor 640 may generate a device list, which is to be registered and which includes an external electronic device that is not included in the registered device list. For example, when there are a plurality of external electronic devices included in a list of devices to be registered, the processor 640 may determine (or calculate) a connection priority between the plurality of external electronic devices. The processor 640 may sequentially establish a communication connection with each of the plurality of external electronic devices depending on a connection priority. For example, when the second electronic device 602-1, the third electronic device 602-2, and the fourth electronic device 602-3 are included in the list of devices to be registered, and the connection priority has the descending order of the second electronic device 602-1, the third electronic device 602-2, and the fourth electronic device 602-3, the processor 640 may first establish a short-range wireless communication connection with the second electronic device 602-1 through the communication circuit 620. After completing authentication and/or registration of the second electronic device 602-1, the processor 640 may establish a short-range wireless communication connection with the third electronic device 602-2 through the communication circuit 620. After completing authentication and/or registration of the third electronic device 602-2, the processor 640 may establish a short-range wireless communication connection with the fourth electronic device 602-3 through the communication circuit 620, and may perform authentication and/or registration of the fourth electronic device 602-3.

According to an embodiment, the processor 640 may authenticate the external electronic device connected to the first electronic device 601 using voiceprint analysis. Hereinafter, it is assumed that the external electronic device connected to the first electronic device 601 is the fourth electronic device 602-3.

According to an embodiment, the processor 640 may perform voiceprint analysis on a user utterance received through the microphone 610. For example, the processor 640 may specify a reliable voiceprint from the user utterance received via the microphone 610. For example, the processor 640 may obtain a specified voiceprint from the user utterance received through the microphone 610.

According to an embodiment, the processor 640 may receive audio data corresponding to the user utterance, which is received through a microphone of the fourth electronic device 602-3, from the fourth electronic device 602-3 through the communication circuit 620. According to an embodiment, the processor 640 may obtain the specified voiceprint from the user utterance received through the microphone of the fourth electronic device 602-3.

In an embodiment, it is described that the first electronic device 601, which is the authenticated or registered electronic device, also performs voiceprint analysis on a user utterance received by the fourth electronic device 602-3, which is an electronic device to be registered, but the disclosure is not limited thereto. According to an embodiment, each of the first electronic device 601 and the fourth electronic device 602-3 may perform voiceprint analysis on the user utterance received through the microphone of each electronic device, and the first electronic device 601 may receive the result of voiceprint analysis from the fourth electronic device 602-3. Accordingly, the first electronic device 601 may obtain the specified voiceprint from the user utterance received through the microphone of the fourth electronic device 602-3.

According to an embodiment, the processor 640 may authenticate the fourth electronic device 602-3 connected to the first electronic device 601 based on whether the obtained two voiceprints match each other. For example, when the voiceprint obtained from the user utterance received through the microphone 610 do not match the voiceprint obtained from the user utterance received through the microphone of the fourth electronic device 602-3, the processor 640 may reject the registration of the fourth electronic device 602-3. For example, the rejecting of the registration of the fourth electronic device 602-3 may refer to the failure of authentication of the fourth electronic device 602-3. For example, when the voiceprint obtained from the user utterance received through the microphone 610 matches the voiceprint obtained from the user utterance received through the microphone of the fourth electronic device 602-3, the processor 640 may approve the registration of the fourth electronic device 602-3.

According to an embodiment, the processor 640 may transmit encrypted personal information to the fourth electronic device 602-3 of which the registration is approved (or authenticated). The processor 640 may register the fourth electronic device 602-3 in the server 603 by transmitting encrypted personal information to the fourth electronic device 602-3. For example, the encrypted personal information may be referred to as "credential information". For example, the encrypted personal information may include information for Internet connection. For example, the encrypted personal information may include at least one of WiFi information and account information for accessing the server 603. For example, the WiFi information may include a service set identifier (SSID) and a WiFi passphrase of the first electronic device 601. For example, the first electronic device 601 may operate as software enabled access point (Soft-AP) such that the fourth electronic device 602-3 is connected to the Internet. For example, the first electronic device 601 operating as the Soft-AP may refer to the first electronic device 601 providing a mobile hotspot function. According to an embodiment, when the processor 640 registers the fourth electronic device 602-3 in the server 603, the processor 640 may transmit information that allows the fourth electronic device 602-3 to register itself in the server 603.

According to an embodiment, the fourth electronic device 602-3 may register itself in the server 603 using the encrypted personal information received from the first electronic device 601. For example, the fourth electronic device 602-3 may connect to the Internet based on WiFi information received from the first electronic device 601. For example, the fourth electronic device 602-3 may connect to the server 603 based on account information received from the first electronic device 601 and may transmit its device information to the server 603 via the Internet. According to an embodiment, the server 603 may register the fourth electronic device 602-3 by receiving and storing device information of the fourth electronic device 602-3 from the fourth electronic device 602-3. According to an embodiment, the server 603 may update the registered device list so as to include the fourth electronic device 602-3.

According to an embodiment, the processor 640 may receive the registered device information of the fourth electronic device 602-3 from the server 603 through the communication circuit 620. According to an embodiment, the processor 640 may at least temporarily store the received device information of the fourth electronic device 602-3 in the memory 630. For example, the processor 640 may update the registered device list and device information of the registered device stored in the memory 630 so as to include device information of each of the fourth electronic device 602-3 and the fourth electronic device 602-3.

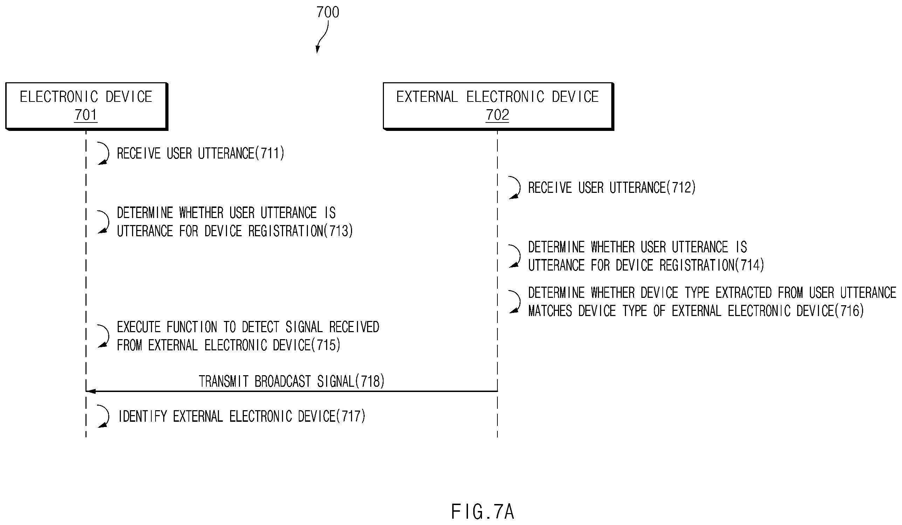

Hereinafter, an example operation of searching for an electronic device to be registered based on a user utterance of a device registration system according to an embodiment will be described in greater detail below with reference to FIG. 7A.

FIG. 7A is a signal flow diagram 700 illustrating an example operation of searching for an electronic device to be registered based on a user utterance of a device registration system, according to various embodiments.

According to an embodiment, an electronic device 701 may be an electronic device previously registered in an external server (e.g., the external server 503 of FIG. 5 or the server 603 of FIG. 6). An external electronic device 702 may be an electronic device not registered in the external server. For example, an electronic device 701 may be the electronic device 601 illustrated in FIG. 6. For example, the external electronic device 702 may be the second electronic device 602-1, the third electronic device 602-2, or the fourth electronic device 602-3 in FIG. 6.

In an embodiment of the disclosure, the electronic device 701 and the external electronic device 702 may perform speech recognition. For example, each of the electronic device 701 and the external electronic device 702 may include at least some modules (e.g., the ASR module 321 or the NLU module 323 of FIG. 2) of the intelligence server 300 of FIG. 2. According to an embodiment, without communication with the external server (e.g., the intelligence server 300 of FIG. 2), the electronic device 701 and the external electronic device 702 may perform operations corresponding to a user's voice input (e.g., a user utterance) based on their own speech recognition function.

According to an embodiment, the electronic device 701 may receive a user utterance (operation 711). The electronic device 701 may determine whether the user utterance is an utterance for device registration (operation 713). For example, the electronic device 701 may determine whether the user utterance is an utterance for registering a device, based on whether the user utterance includes a specified keyword. According to an embodiment, the specified keyword may be a keyword for registering the external electronic device 702. For example, the specified keyword may include "registration" or "connection".

According to an embodiment, when the user utterance is the utterance for registering a device, the electronic device 701 may execute a function to detect a signal received from an external electronic device (operation 715). For example, the function to detect a signal received from an external electronic device may be referred to as "listening". For example, the electronic device 701 may receive a signal broadcast from a peripheral electronic device during a specified time (e.g., N seconds (sec)).

According to an embodiment, the external electronic device 702 may receive the user utterance (operation 712). For example, the user utterance may be the same as the user utterance received by the electronic device 701. According to an embodiment, the external electronic device 702 may determine whether the user utterance is an utterance for device registration (operation 714). Operation 714 may be performed in the same or similar manner as operation 713 described above.

According to an embodiment, the external electronic device 702 may determine whether the device type extracted from the user utterance matches the device type of the external electronic device 702 (operation 716). For example, the user utterance may include a word indicating a device type, such as "register a TV". For example, the external electronic device 702 may determine whether the device type of 'TV' extracted from the user utterance matches the device type of the external electronic device 702. According to an embodiment, when the device type extracted from the user utterance matches the device type of the external electronic device 702, the external electronic device 702 may broadcast a signal to a peripheral electronic device. For example, the external electronic device 702 may transmit a broadcast signal to the electronic device 701 (operation 718). According to an embodiment, the broadcast signal transmitted by the external electronic device 702 may include identification information (e.g., SSID) of the external electronic device 702 and device information of the external electronic device 702. For example, the device information of the external electronic device 702 may include a device type of the external electronic device 702. According to an embodiment, the broadcast signal transmitted by the external electronic device 702 may include a connection request.

According to an embodiment, the electronic device 701 may identify the external electronic device based on the signal received from the external electronic device 702 (operation 717). For example, the electronic device 701 may identify the external electronic device 702 based on identification information (e.g., SSID) of the external electronic device 702 included in the received signal.

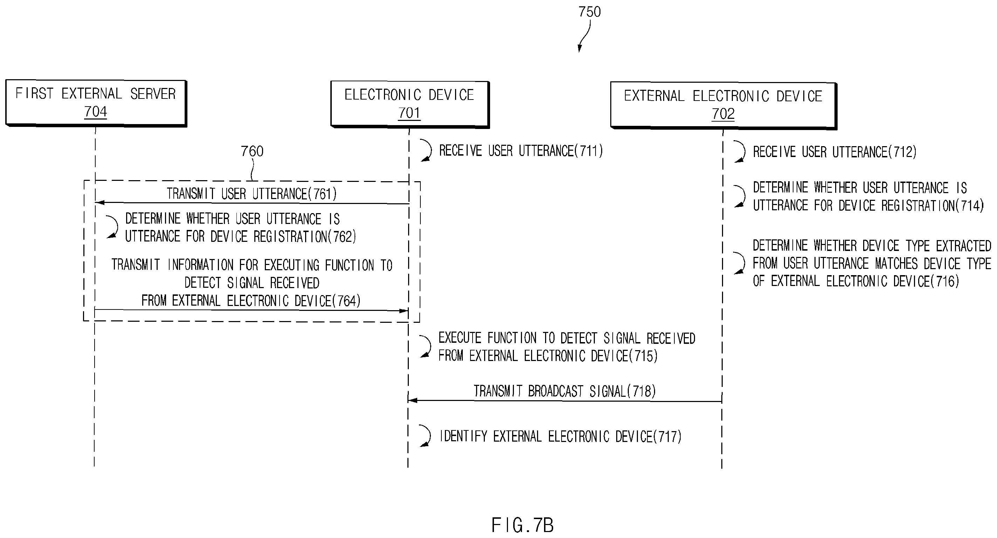

Hereinafter, an example operation of searching for an electronic device to be registered based on a user utterance of a device registration system according to an embodiment will be described in greater detail below with reference to FIG. 7B.

FIG. 7B is a signal flow diagram 750 illustrating an example operation of searching for an electronic device to be registered based on a user utterance of a device registration system, according to various embodiments. Among operations illustrated in FIG. 7B, descriptions given with reference to FIG. 7A may be applied to operations having the same reference numerals as those illustrated in FIG. 7A. Hereinafter, a difference 760 from FIG. 7A will be mainly described with respect to FIG. 7B.

In an embodiment of the disclosure, the external electronic device 702 may perform speech recognition. For example, the external electronic device 702 may include at least some modules (e.g., the ASR module 321 or the NLU module 323 of FIG. 2) of the intelligence server 300 of FIG. 2. According to an embodiment, without communication with an external server (e.g., the intelligence server 300 of FIG. 2), the external electronic device 702 may perform operations corresponding to a user's voice input (e.g., a user utterance) based on its own speech recognition function. In an embodiment of the disclosure, the electronic device 701 may transmit a user utterance to a first external server 704 (e.g., the intelligence server 300 of FIG. 2), may receive information for performing an operation corresponding to the user utterance from the first external server 704, and may perform the operation corresponding to the user utterance based on the received information.

Referring to the difference 760 between FIG. 7A and FIG. 7B, the electronic device 701 may transmit the received user utterance to the first external server 704 (operation 761). According to an embodiment, the first external server 704 may determine whether the user utterance is an utterance for device registration (operation 762). Operation 762 may be performed in the same or similar manner as operation 713 described above with reference to FIG. 7A. According to an embodiment, when the user utterance is an utterance for device registration, the first external server 704 may transmit information for executing a function to detect a signal received from an external electronic device (operation 764). For example, the information for executing the function to detect the signal received from the external electronic device may include defining a plurality of operations for executing a function to detect a signal received from an external electronic device and/or a parameter input to execute the plurality of operations, or a result value output by the execution of the plurality of operations. According to an embodiment, the electronic device 701 may execute a function to detect a signal received from the external electronic device based on the information received from the first external server 704 (operation 715).

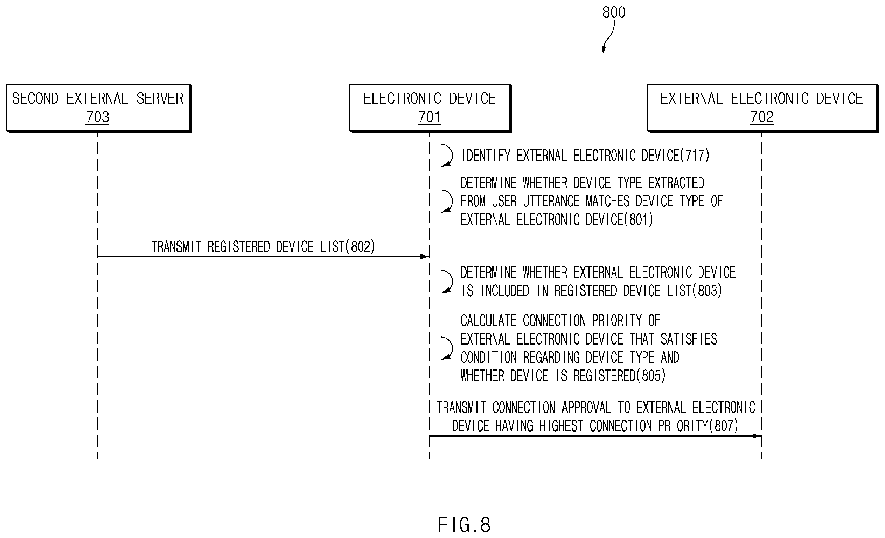

Hereinafter, an example operation of connecting a registered electronic device to an electronic device to be registered in a device registration system according to an embodiment will be described in greater detail below with reference to FIG. 8.

FIG. 8 is a signal flow diagram 800 illustrating an example operation of connecting a registered electronic device to an electronic device to be registered in a device registration system, according to various embodiments. FIG. 8 may illustrated, for example, operations performed after operation 717 of FIG. 7A or 7B.

According to an embodiment, the electronic device 701 may determine whether a device type extracted from a user utterance matches a device type of the external electronic device 702 (operation 801). According to an embodiment, the electronic device 701 may identify the device type of the external electronic device 702 transmitting a signal based on device information of the external electronic device 702 included in the signal received from the external electronic device 702. The electronic device 701 may determine whether the device type of the external electronic device 702 transmitting the signal matches a device type extracted from the user utterance. According to an embodiment, when the device type of the external electronic device 702 transmitting the signal does not match the device type extracted from the user utterance, the electronic device 701 may reject a connection request of the external electronic device 702.

According to an embodiment, when the device type extracted from the user utterance matches the device type of the external electronic device 702, the electronic device 701 may determine whether the external electronic device 702 is included in the device list registered in the second external server 703 (operation 803). For example, the second external server 703 may be the server 603 of FIG. 6. According to an embodiment, the second external server 703 may store device information of one or more registered electronic devices. According to an embodiment, the second external server 703 may communicate with the electronic device 701 through a wireless communication network (e.g., Internet). According to an embodiment, the second external server 703 may transmit the registered device list to the electronic device 701 (operation 802). According to an embodiment, the second external server 703 may transmit device information of each registered device, which is included in the registered device list, to the electronic device 701 together with the registered device list. According to an embodiment, the electronic device 701 may determine whether the external electronic device 702 is included in the registered device list, based on the device information of the external electronic device 702 included in the signal received from the external electronic device 702 and the device information of the registered device received from the second external server 703. For example, when there is device information matching the device information of the external electronic device 702 from among device information of registered devices, the electronic device 701 may determine that the external electronic device 702 is included in the registered device list. According to an embodiment, when the external electronic device 702 transmitting the signal is included in the registered device list, the electronic device 701 may reject a connection request of the external electronic device 702.

According to an embodiment, the electronic device 701 may calculate a connection priority of an external electronic device that satisfies a condition regarding a device type and whether a device is registered (operation 805). According to an embodiment, the condition regarding a device type may include an event that the device type of the external electronic device matches a device type extracted from the user utterance. According to an embodiment, the condition regarding whether a device is registered may include an event that the external electronic device is not included in the registered device list received from the second external server 703. In FIG. 8, although only the external electronic device 702 is shown, there may be a plurality of external electronic devices; the electronic device 701 may receive a broadcast signal from the plurality of external electronic devices; and, there may also be a plurality of external electronic devices that satisfy the condition regarding a device type and whether a device is registered. According to an embodiment, the electronic device 701 may calculate the connection priority between a plurality of external electronic devices.

According to an embodiment, the electronic device 701 may transmit a connection approval to an external electronic device (e.g., the external electronic device 702) having the highest connection priority among the plurality of external electronic devices (operation 807). For example, the electronic device 701 and the external electronic device 702 may be connected with each other through a short-range wireless communication network (e.g., WiFi Direct or Bluetooth).

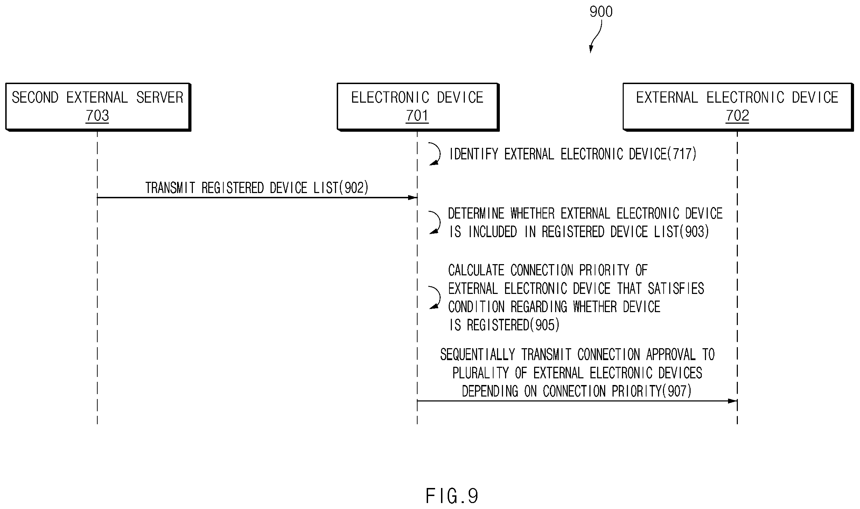

Hereinafter, an example operation of connecting a registered electronic device to an electronic device to be registered in a device registration system according to an embodiment will be described in greater detail below with reference to FIG. 9.

FIG. 9 is a signal flow diagram 900 illustrating an example operation of connecting a registered electronic device to an electronic device to be registered in a device registration system, according to various embodiments. FIG. 9 illustrates operations performed after operation 717 of FIG. 7A or 7B. FIG. 8 is a diagram illustrating a flow of an operation of connecting a registered electronic device (e.g., the electronic device 701) to an electronic device to be registered (e.g., the external electronic device 702) when a user utterance includes a word indicating a device type, such as "register a TV". FIG. 9 is a diagram illustrating a flow of an operation of connecting a registered electronic device (e.g., the electronic device 701) to an electronic device to be registered (e.g., the external electronic device 702) when a user utterance does not include a word indicating a device type, such as "register". According to an embodiment, when a device type is not extracted from a user utterance, the electronic device 701 may omit operation 801 of FIG. 8.

According to an embodiment, the electronic device 701 may determine whether the external electronic device 702 is included in the device list registered in the second external server 703 (operation 903). The descriptions given with reference to FIG. 8 may be identically or similarly applied to the second external server 703. According to an embodiment, the second external server 703 may transmit the registered device list to the electronic device 701 (operation 902). According to an embodiment, the second external server 703 may transmit device information of each registered device, which is included in the registered device list, to the electronic device 701 together with the registered device list. Operation 903 may be performed in the same or similar manner as operation 803 described above with reference to FIG. 8. According to an embodiment, when the external electronic device 702 transmitting the signal is included in the registered device list, the electronic device 701 may reject a connection request of the external electronic device 702.

According to an embodiment, the electronic device 701 may calculate a connection priority of an external electronic device that satisfies a condition regarding whether a device is registered (operation 905). The descriptions given with reference to FIG. 8 may be identically or similarly applied to the condition regarding whether a device is registered. According to an embodiment, when there are a plurality of external electronic devices that satisfy the condition regarding whether a device is registered, the electronic device 701 may calculate the connection priority between the plurality of external electronic devices.

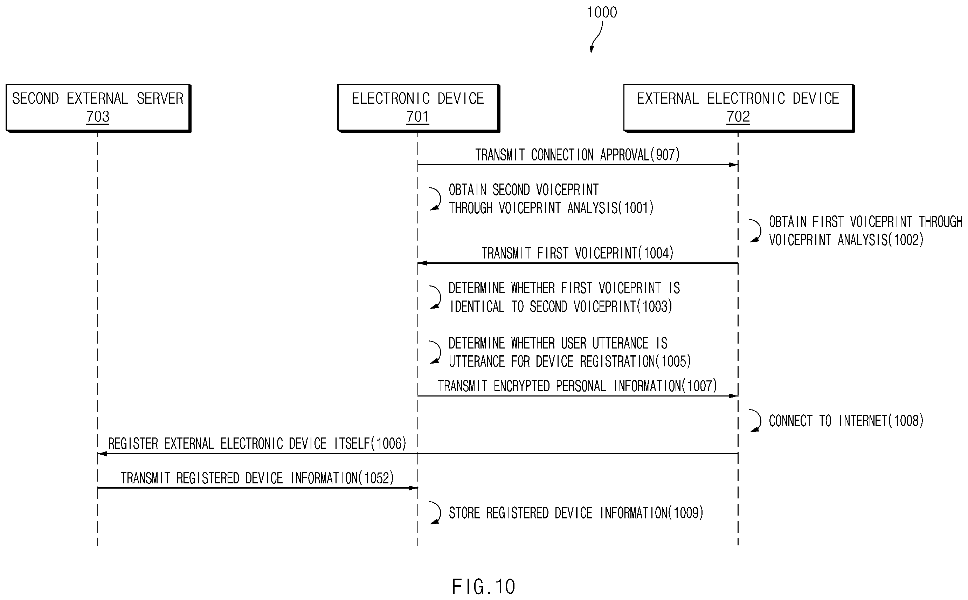

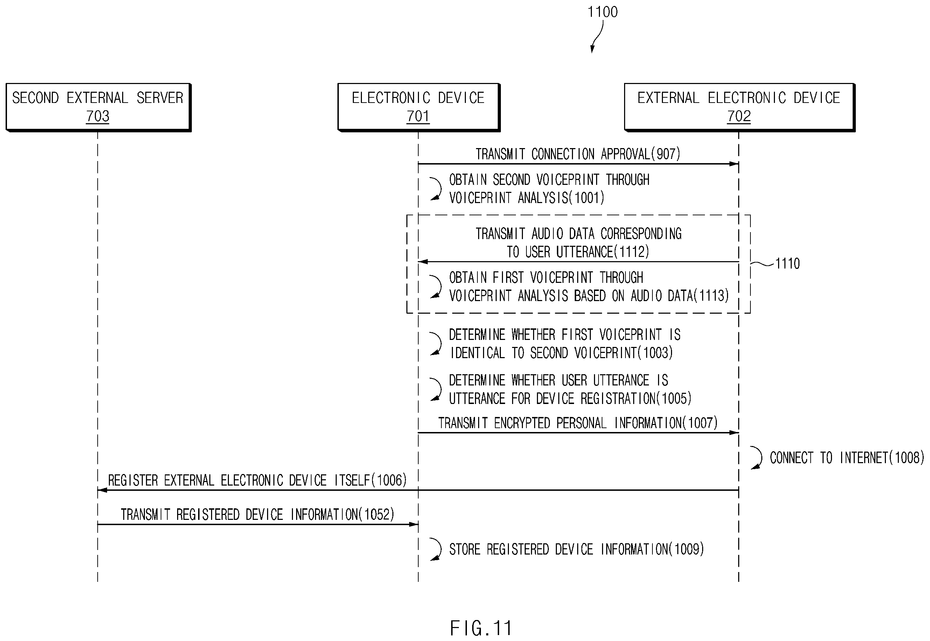

According to an embodiment, the electronic device 701 may sequentially transmit a connection approval to an external electronic device (e.g., the external electronic device 702) in the descending order of connection priorities depending on the connection priority of a plurality of external electronic devices (operation 907). For example, the electronic device 701 and the external electronic device 702 may be connected with each other through a short-range wireless communication network (e.g., WiFi Direct or Bluetooth). For example, the electronic device 701 may establish a connection with a first external electronic device by first transmitting a connection approval to the first external electronic device having a connection priority thus relatively high, and then may perform operations of FIG. 10 or FIG. 11 to be described in greater detail below. After completely registering the first external electronic device, the electronic device 701 may establish a connection with a second external electronic device by transmitting a connection approval to the second external electronic device having a connection priority following the first external electronic device, and then may perform operations of FIG. 10 or FIG. 11 to be described in greater detail below.

Hereinafter, an operation of authenticating and registering an electronic device to be registered in a device registration system according to an embodiment will be described in greater detail below with reference to FIG. 10.

FIG. 10 is a signal flow diagram 1000 illustrating an example operation of authenticating and registering an electronic device to be registered in a device registration system, according to various embodiments. FIG. 10 illustrates operations performed after operation 807 of FIG. 8 or operation 907 of FIG. 9. According to an embodiment, the electronic device 701 and the external electronic device 702 may communicate with each other through a short-range wireless communication network.

According to an embodiment, the electronic device 701 may obtain a second voiceprint through voiceprint analysis on a user utterance (operation 1001). According to an embodiment, the external electronic device 702 may obtain a first voiceprint through voiceprint analysis on the user utterance (operation 1002). For example, like a fingerprint, a user's voice may also have a unique feature for each user, and the unique feature of a voice of each user may be referred to a "voiceprint". According to an embodiment, the voiceprint analysis may include specifying a reliable voiceprint by extracting the unique feature of the user's voice and comparing the specified voiceprint with a voiceprint of another user, and may be used for speaker identification or speaker verification. In an embodiment of the disclosure, the electronic device 701 and the external electronic device 702 may perform voiceprint analysis based on the user utterance received by each electronic device. According to an embodiment, the external electronic device 702 may transmit the first voiceprint obtained through voiceprint analysis to the electronic device 701 (operation 1004).

According to an embodiment, the electronic device 701 may determine whether the first voiceprint is identical to the second voiceprint (operation 1003). For example, when the first voiceprint is identical to the second voiceprint, the electronic device 701 may determine that a user who utters a user utterance to be received by the electronic device 701 is the same as a user who utters a user utterance to be received by the external electronic device 702. According to an embodiment, when the first voiceprint is not identical to the second voiceprint, the electronic device 701 may fail to authenticate the external electronic device 702. According to an embodiment, the electronic device 701 may reject the registration of the external electronic device 702 for which authentication has failed.

According to an embodiment, when the first voiceprint is identical to the second voiceprint, the electronic device 701 may determine whether the user utterance is an utterance for device registration (operation 1005). Operation 1005 may be performed in the same or similar manner as operation 713 described above with reference to FIG. 7A. For example, the electronic device 701 may determine whether the user utterance is the utterance for device registration, based on whether the user utterance includes a keyword for registering an external electronic device. For example, the keyword for registering an external electronic device may include "registration" or "connection". According to an embodiment, when the user utterance is not the utterance for device registration even though the first voiceprint is identical to the second voiceprint, the electronic device 701 may fail to authenticate the external electronic device 702. According to an embodiment, when the first voiceprint is identical to the second voiceprint and the user utterance is the utterance for device registration, the electronic device 701 may successfully authenticate the external electronic device 702.

According to an embodiment, the electronic device 701 may transmit encrypted personal information to the authenticated external electronic device 702 (operation 1007). For example, the encrypted personal information may include information for Internet connection. For example, the encrypted personal information may include at least one of WiFi information and account information for accessing the second external server 703. For example, the WiFi information may include a SSID and a WiFi passphrase of the electronic device 701.

According to an embodiment, the external electronic device 702 may connect to the Internet based on the encrypted personal information received from the electronic device 701 (operation 1008). For example, the external electronic device 702 may connect to the Internet based on WiFi information received from the electronic device 701.

According to an embodiment, the external electronic device 702 may register itself in the second external server 703 (operation 1006). For example, the external electronic device 702 may connect to the second external server 703 based on the account information received from the electronic device 701, and may transmit its device information (e.g., a serial number or a model code) to the second external server 703 via the Internet.

According to an embodiment, the second external server 703 may transmit the registered device information to the electronic device 701 (operation 1052). For example, the second external server 703 may transmit device information of the external electronic device 702 to the electronic device 701.

According to an embodiment, the electronic device 701 may store the registered device information received from the second external server 703 (operation 1009). For example, the electronic device 701 may at least temporarily store device information of the external electronic device 702 received from the second external server 703. For example, the electronic device 701 may update the registered device list such that the registered device list stored in the electronic device 701 includes the external electronic device 702.

Hereinafter, an example operation of authenticating and registering an electronic device to be registered in a device registration system according to an embodiment will be described in greater detail below with reference to FIG. 11.

FIG. 11 is a signal flow diagram 1100 illustrating an example operation of authenticating and registering an electronic device to be registered in a device registration system, according to various embodiments. Among operations illustrated in FIG. 11, descriptions given with reference to FIG. 10 may be applied to operations having the same reference numerals as those illustrated in FIG. 10. Hereinafter, a difference 1110 from FIG. 10 will be mainly described with respect to FIG. 11.

In an embodiment of the disclosure, the external electronic device 702 does not perform voiceprint analysis by itself, but the electronic device 701 may perform voiceprint analysis on a user utterance received by the external electronic device 702.

Referring to the difference 1110 between FIG. 10 and FIG. **11****,** the external electronic device 702 may transmit audio data corresponding to a user utterance received by the external electronic device 702 to the electronic device 701 (operation 1112). According to an embodiment, the electronic device 701 may obtain a first voiceprint through voiceprint analysis based on the audio data received from the external electronic device 702 (operation 1113). The description with reference to FIG. 10 may be identically or similarly applied to operations performed afterward.

According to the embodiments described above with reference to FIGS. 7A to 11, when searching for an electronic device to be registered, selecting and connecting one (e.g., the external electronic device 702) of the found electronic devices, authenticating the connected electronic device, and registering the authenticated electronic device to a server (e.g., the second external server 703), the electronic device 701, which is a registered electronic device, may perform all operations based only on a user utterance received once. The device registration system according to the above-described embodiments may register an unregistered electronic device using a registered electronic device without receiving an individual user input (e.g., a touch input) for searching for an electronic device to be registered for each operation, selecting one of the found electronic devices, or transmitting and receiving reliable information (e.g., PIN number) between electronic devices for authentication, thereby simplifying a registration process and improving user convenience.

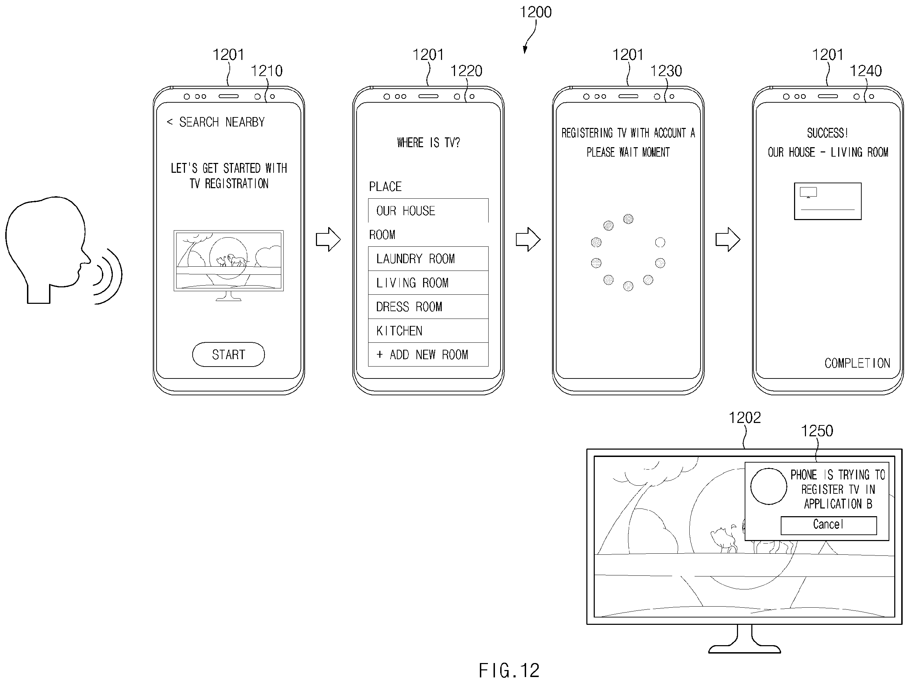

Hereinafter, an example user interface provided by a device registration system according to an embodiment will be described in greater detail below with reference to FIG. 12.

FIG. 12 is a diagram 1200 illustrating an example user interface provided by a device registration system, according to various embodiments.

For example, an electronic device 1201 may be the electronic device 701 of FIGS. 7A to 11, and an external electronic device 1202 may be the external electronic device 702 of FIGS. 7A to 11. According to an embodiment, each of the electronic device 1201 and the external electronic device 1202 may include a display. Each of the electronic device 1201 and the external electronic device 1202 may provide a user interface (e.g., a graphic user interface (GUI)) through a display.

For example, the electronic device 1201 and the external electronic device 1202 may receive a user utterance of "register a TV". When receiving the user utterance, the electronic device 1201 may provide a first user interface 1210. According to an embodiment, the first user interface 1210 may be a user interface for displaying a result indicating that the electronic device 1201 searches for a peripheral electronic device based on a user utterance, and determines an electronic device to be registered from among the found electronic devices. According to an embodiment, the determined electronic device to be registered may be an electronic device authenticated through voiceprint analysis. For example, the first user interface 1210 may include an element (e.g., a start button) that allows a user to determine whether to start to register the electronic device to be registered. For example, the electronic device 1201 may provide a second user interface 1220 based on a user input for an element regarding whether to start registration.

According to an embodiment, the second user interface 1220 may be a user interface through which the electronic device 1201 receives environment information (e.g., location information or place information) of an electronic device to be registered· For example, the environment information may be used for convenience in managing devices registered in an external server (e.g., the second external server 703 of FIGS. 7A to 11). For example, the second user interface 1220 may include a user interface for receiving information about a place at which an electronic device to be registered is positioned. According to an embodiment, when receiving the environment information of the electronic device to be registered through the second user interface 1220, the electronic device 1201 may provide a third user interface 1230.

According to an embodiment, the third user interface 1230 may be a user interface indicating that the electronic device 1201 is registering an electronic device to be registered in the external server. For example, while the third user interface 1230 is provided, the electronic device 1201 may transmit information for Internet connection to the external electronic device 1202, which is an electronic device to be registered. For example, the information for Internet connection may include WiFi information (e.g., SSID or WiFi passphrase). The external electronic device 1202 may connect to the Internet based on the WiFi information received from the electronic device 1201, and may transmit its device information to the external server through the Internet. According to an embodiment, when receiving the device information of the external electronic device 1202 from the external server, the electronic device 1201 may identify that the external electronic device 1202 is completely registered. According to an embodiment, the electronic device 1201 may provide a fourth user interface 1240 indicating that the external electronic device 1202 is successfully registered.

According to an embodiment, when the electronic device 1201 receives a user input for starting registration of the external electronic device 1202 through the first user interface 1210, the electronic device 1201 may transmit, to the external electronic device 1202, a notification that the electronic device 1201 attempts to register the external electronic device 1202. According to an embodiment, when receiving a notification of a registration attempt from the electronic device 1201, the external electronic device 1202 may provide a fifth user interface 1250. For example, the fifth user interface 1250 may include an element (e.g., a cancel button) for preventing the external electronic device 1202 from being registered. For example, the external electronic device 1202 may disconnect from the electronic device 1201 based on a user input to an element regarding registration prevention.

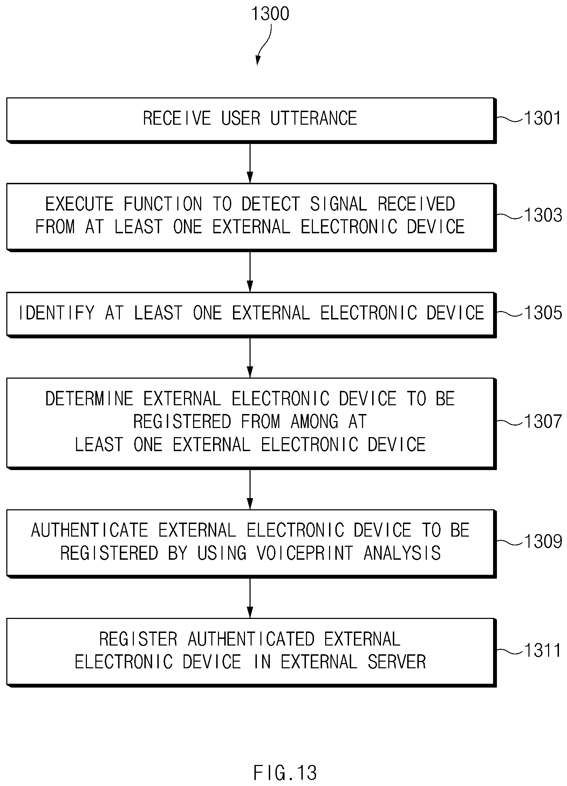

Hereinafter, an example operation in which an electronic device according to an embodiment registers an external electronic device in an external server will be described in greater detail below with reference to FIG. 13.

FIG. 13 is a flowchart 1300 illustrating an example operation of an electronic device, according to various embodiments. Operations of an electronic device to be described later may be performed by the first electronic device 601 of FIG. 6 or the processor 640 of the first electronic device 601.

In operation 1301, the electronic device may receive a user utterance. According to an embodiment, the electronic device may receive the user utterance through a microphone (e.g., the microphone 610 of FIG. 6). According to an embodiment, the electronic device may generate a response corresponding to the user utterance using a speech recognition function of the electronic device itself. According to an embodiment, the electronic device may transmit the user utterance to an external server (e.g., the intelligence server 300 of FIG. 2) through a communication circuit (e.g., the communication circuit 620 in FIG. 6) and may receive the response corresponding to the user utterance from the external server. According to an embodiment, the response corresponding to the user utterance may include defining a plurality of operations for executing a function to detect a signal received from at least one external electronic device and/or a parameter input to execute the plurality of operations, or a result value output by the execution of the plurality of operations.

In operation 1303, the electronic device may execute a function to detect a signal received from at least one external electronic device. According to an embodiment, the electronic device may execute a function to detect a signal received from at least one external electronic device (e.g., the at least one external electronic device 602 of FIG. 6) based on the user utterance. According to an embodiment, the electronic device may determine whether the user utterance includes a keyword for registering an external electronic device. For example, the keyword for registering an external electronic device may include "registration" or "connection". According to an embodiment, when it is determined that the user utterance includes the keyword for registering the external electronic device, the electronic device may execute a function to detect a signal received from the at least one external electronic device. According to an embodiment, the signal received from at least one external electronic device may be a signal broadcast by at least one external electronic device in response to the user utterance. For example, when the user utterance includes the keyword for device registration such as "registration" or "connection" and includes a word indicating the same device type as the device type of the at least one external electronic device, the at least one external electronic device may broadcast a signal to a peripheral electronic device. According to an embodiment, the signal received from at least one external electronic device may include identification information and device information of the external electronic device transmitting the signal. For example, the identification information may be an SSID. For example, the device information may include a device type.

In operation 1305, the electronic device may identify at least one external electronic device. According to an embodiment, the electronic device may identify at least one external electronic device based on the signal. According to an embodiment, the electronic device may identify the external electronic device transmitting the corresponding signal, based on the identification information of the external electronic device included in a signal received from at least one external electronic device.

In operation 1307, the electronic device may determine an external electronic device to be registered from among at least one external electronic device. For example, the user utterance may include a word indicating a device type, such as "register a TV". According to an embodiment, the electronic device may determine an external electronic device to be registered among at least one external electronic device based on device information included in a signal and device information extracted from a user utterance. According to an embodiment, each of the device information included in the signal and the device information extracted from the user utterance may include a device type. According to an embodiment, the electronic device may determine whether a device type included in the received signal matches a device type extracted from a user utterance. According to an embodiment, when the device type included in the signal does not match the device type extracted from the user utterance, the electronic device may reject a connection request of the external electronic device transmitting the corresponding signal. According to an embodiment, when the device type included in the signal matches the device type extracted from the user utterance, the electronic device may determine whether at least one external electronic device is included in the device list registered in the external server (e.g., the server 603 in FIG. 6). According to an embodiment, the registered device list may be received by the electronic device from an external server (e.g., the server 603 of FIG. 6) through a communication circuit and then may be at least temporarily stored in a memory (e.g., the memory 630 of FIG. 6). According to an embodiment, the electronic device may determine that an external electronic device not included in the registered device list from among at least one external electronic device is an external electronic device to be registered. According to an embodiment, the electronic device may reject a connection request of an external electronic device included in the registered device list from among at least one external electronic device.

According to an embodiment, when there are a plurality of external electronic devices that are not included in the registered device list, the electronic device may determine the connection priority between the plurality of external electronic devices. According to an embodiment, the electronic device may establish a communication connection with one of a plurality of external electronic devices via a communication circuit based on the connection priority. According to an embodiment, the electronic device may establish a communication connection with the external electronic device having the highest connection priority among the plurality of external electronic devices. According to an embodiment, the electronic device may establish a communication connection with the external electronic device by approving the connection request of the determined external electronic device. For example, the electronic device may communicate with an external electronic device via a short-range wireless communication network. For example, the short-range wireless communication network may include WiFi direct or Bluetooth.

As another example, the user utterance may not include a word indicating a device type, such as "register" or "connect". For example, when the user utterance is an utterance that does not specify a device type, such as "register" or "connect", the electronic device may fail to extract the device type from the user utterance. According to an embodiment, when the electronic device is incapable of extracting a device type from the user utterance, the electronic device may omit an operation of determining whether the device type is matched. According to an embodiment, regardless of the device type of the external electronic device, the electronic device may generate a list of devices, which are to be registered and which include an external electronic device not included in the registered device list. According to an embodiment, when there are a plurality of external electronic devices that are included in the registered device list, the electronic device may determine the connection priority between the plurality of external electronic devices. According to an embodiment, the electronic device may sequentially establish a communication connection with each of the plurality of external electronic devices depending on the connection priority. According to an embodiment, after first connecting to an external electronic device with a connection priority that is relatively high, the electronic device may complete authentication and/or registration of the connected external electronic device, and then may connect to an external electronic device with the following connection priority.

In operation 1309, the electronic device may authenticate an external electronic device to be registered using voiceprint analysis. According to an embodiment, the electronic device may authenticate the external electronic device to be registered using voiceprint analysis on the user utterance. According to an embodiment, the electronic device may receive information about voiceprint analysis on the user utterance from an external electronic device connected to the electronic device. For example, the information about voiceprint analysis received from the external electronic device may include audio data corresponding to a user utterance received by the external electronic device through a microphone of the external electronic device, or a first voiceprint obtained by the external electronic device through voiceprint analysis based on the audio data. According to an embodiment, when the electronic device receives audio data corresponding to the user utterance received by the external electronic device from the external electronic device, the electronic device may obtain the first voiceprint through voiceprint analysis based on the audio data. According to an embodiment, the electronic device may obtain a second voiceprint by performing voiceprint analysis on a user utterance received through a microphone of the electronic device. According to an embodiment, the electronic device may authenticate an external electronic device connected to the electronic device based on whether the first voiceprint obtained from the user utterance received by the external electronic device matches the second voiceprint obtained from the user utterance received by the electronic device.

According to an embodiment, when the first voiceprint does not match the second voiceprint, the electronic device may fail to authenticate the external electronic device. According to an embodiment, when the first voiceprint is identical to the second voiceprint, the electronic device may successfully authenticate the external electronic device. According to an embodiment, the fact that the first voiceprint matches the second voiceprint may be considered that a user who utters a user utterance received by the electronic device is the same as a user who utters a user utterance received by the external electronic device. According to an embodiment, when the first voiceprint is identical to the second voiceprint, the electronic device may determine whether the user utterance includes a keyword for registering the external electronic device. According to an embodiment, when it is determined that the first voiceprint is identical to the second voiceprint and the user utterance includes the keyword for registering the external electronic device, the electronic device may transmit encrypted personal information to the authenticated external electronic device. According to an embodiment, the encrypted personal information may include information for Internet connection. According to an embodiment, the encrypted personal information may be used by an authenticated external electronic device to register itself in an external server (e.g., the server 603 of FIG. 6).

In operation 1311, the electronic device may register the authenticated external electronic device in the external server. According to an embodiment, the electronic device may register an authenticated external electronic device (or for which authentication is successful) to the external server. According to an embodiment, the electronic device may operate as a Soft-AP (e.g., a hotspot) such that the authenticated external electronic device is connected to the Internet. According to an embodiment, the electronic device may cause an external electronic device to connect to the Internet based on information for Internet connection by transmitting the information for Internet connection to the external electronic device. For example, the information for Internet connection may be WiFi information (e.g., SSID and WiFi passphrase of an electronic device). For example, the external electronic device may connect to the Internet based on the WiFi information and then may transmit its device information (e.g., serial number or model code) to the external server (e.g., the server 603 of FIG. 6) through the Internet. According to an embodiment, the external server may store device information of the external electronic device received from the external electronic device, and thus the external electronic device may be registered in the external server.

According to an example embodiment, an electronic device (e.g., the electronic device 101 of FIG. 1, the user terminal 201 of FIGS. 2 and 4, the electronic device 501 of FIG. 5, the first electronic device 601 of FIG. 6, or the electronic device 701 of FIGS. 7A to 11) may include: a microphone (e.g., the input module 150 of FIG. 1, the microphone 270 of FIG. 2, or the microphone 610 of FIG. 6), a communication circuit (e.g., the communication module 190 of FIG. 1, the communication interface 290 of FIG. 2, or the communication circuit 620 of FIG. 6), a memory (e.g., the memory 130 of FIG. 1, the memory 230 of FIG. 2, or the memory 630 of FIG. 6) and a processor (e.g., the processor 120 in FIG. 1, the processor 220 in FIG. 2, or the processor 640 in FIG. 6) operatively connected to the microphone, the communication circuit, and the memory. The memory may store one or more instructions that, when executed, cause the processor to: receive an utterance through the microphone, execute a function to detect a signal received from at least one external electronic device (e.g., the electronic device 102 of FIG. 1, the at least one external electronic device 502 of FIG. 5, the at least one external electronic device 602 of FIG. 6, or the external electronic device 702 of FIGS. 7A to 11) based on the utterance, identify the at least one external electronic device based on the signal, determine an external electronic device to be registered from among the at least one external electronic device based on device information included in the signal and device information extracted from the utterance, authenticate the external electronic device to be registered, using voiceprint analysis on the utterance, and register the authenticated external electronic device in an external server (e.g., the server 108 of FIG. 1, the service server 400 of FIG. 2, the external server 503 of FIG. 5, the server 603 of FIG. 6, or the second external server 703 of FIGS. 8 to 11).

According to an example embodiment, the instructions, when executed, may cause the processor to: determine whether the utterance includes a keyword for registering an external electronic device, and execute the function to detect the signal based on determining that the utterance includes the keyword.

According to an example embodiment, each of the device information included in the signal and the device information extracted from the utterance may include a device type. The instructions, when executed, may cause the processor to: determine whether a device type included in the signal matches a device type extracted from the utterance, determine whether the at least one external electronic device is included in a device list registered in the external server, and determine that an external electronic device, not included in the list, is the external electronic device to be registered.

According to an example embodiment, the instructions, when executed, may cause the processor to: determine a connection priority between the plurality of external electronic devices based on there being a plurality of external electronic devices not included in the list, and establish a communication connection with one of the plurality of external electronic devices through the communication circuit based on the connection priority.

According to an example embodiment, the instructions, when executed, may cause the processor to establish a communication connection with an external electronic device having the highest connection priority.

According to an example embodiment, the instructions, when executed, may cause the processor to: omit an operation of determining whether a device type is matched, based on it being impossible to extract the device type from the utterance, generate a device list, to be registered and including an external electronic device not included in the registered device list, determine a connection priority between the plurality of external electronic devices based on there being a plurality of external electronic devices included in the device list to be registered, and sequentially establish a communication connection with each of the plurality of external electronic devices based on the connection priority.

According to an example embodiment, the instructions, when executed, may cause the processor to: establish a communication connection with the external electronic device, determined and to be registered, through the communication circuit, receive information about voiceprint analysis on the utterance from the connected external electronic device, obtain a first voiceprint based on the received information, obtain a second voiceprint by performing the voiceprint analysis on the utterance, and authenticate the connected external electronic device based on whether the first voiceprint is identical to the second voiceprint.

According to an example embodiment, the received information may include audio data corresponding to the utterance received by the external electronic device through a microphone of the external electronic device or the first voiceprint obtained by the external electronic device through voiceprint analysis based on the audio data.

According to an example embodiment, the instructions, when executed, may cause the processor to: determine whether the utterance includes a keyword for registering an external electronic device based on the first voiceprint being identical to the second voiceprint, and transmit encrypted personal information to the authenticated external electronic device based on determining that the utterance includes the keyword.

According to an example embodiment, the encrypted personal information may include information for Internet connection and may be used such that the authenticated external electronic device is configured to register the authenticated external electronic device in the external server.

According to an example embodiment, a method of operating an electronic device (e.g., the electronic device 101 of FIG. 1, the user terminal 201 of FIGS. 2 and 4, the electronic device 501 of FIG. 5, the first electronic device 601 of FIG. 6, or the electronic device 701 of FIGS. 7A to 11) may include: receiving an utterance, executing a function to detect a signal received from at least one external electronic device based on the utterance, identifying the at least one external electronic device based on the signal, determining an external electronic device to be registered from among the at least one external electronic device (e.g., the electronic device 102 of FIG. 1, the at least one external electronic device 502 of FIG. 5, the at least one external electronic device 602 of FIG. 6, or the external electronic device 702 of FIGS. 7A to 11) based on device information included in the signal and device information extracted from the utterance, authenticating the external electronic device to be registered, using voiceprint analysis on the utterance, and registering the authenticated external electronic device in an external server (e.g., the server 108 of FIG. 1, the service server 400 of FIG. 2, the external server 503 of FIG. 5, the server 603 of FIG. 6, or the second external server 703 of FIGS. 8 to 11).

According to an example embodiment, the method may further include: determining whether the utterance includes a keyword for registering an external electronic device, and executing the function to detect the signal based on determining that the utterance includes the keyword.

According to an example embodiment, each of the device information included in the signal and the device information extracted from the utterance may include a device type. The method may further include: determining whether a device type included in the signal matches a device type extracted from the utterance, determining whether the at least one external electronic device is included in a device list registered in the external server, and determining that an external electronic device, not included in the list, is the external electronic device to be registered.

According to an example embodiment, the method may further include: determining a connection priority between the plurality of external electronic devices based on there being a plurality of external electronic devices not included in the list, and establishing a communication connection with one of the plurality of external electronic devices based on the connection priority.

According to an example embodiment, the method may further include establishing a communication connection with an external electronic device having the highest connection priority.

According to an example embodiment, the method may further include: omitting an operation of determining whether a device type is matched, based on it being impossible to extract the device type from the utterance, generating a device list, to be registered and including an external electronic device not included in the registered device list, determining a connection priority between the plurality of external electronic devices based on there being a plurality of external electronic devices included in the device list to be registered, and sequentially establishing a communication connection with each of the plurality of external electronic devices based on the connection priority.

According to an example embodiment, the method may further include: establishing a communication connection with the external electronic device, determined and to be registered, receiving information about voiceprint analysis on the utterance from the connected external electronic device, obtaining a first voiceprint based on the received information, obtaining a second voiceprint by performing the voiceprint analysis on the utterance, and authenticating the connected external electronic device based on whether the first voiceprint is identical to the second voiceprint.

According to an example embodiment, the received information may include audio data corresponding to the utterance received by the external electronic device through a microphone of the external electronic device or the first voiceprint obtained by the external electronic device through voiceprint analysis based on the audio data.

According to an example embodiment, the method may further include: determining whether the utterance includes a keyword for registering an external electronic device based on the first voiceprint being identical to the second voiceprint, and transmitting encrypted personal information to the authenticated external electronic device based on determining that the utterance includes the keyword.

According to an example embodiment, the encrypted personal information may include information for Internet connection and may be used such that the authenticated external electronic device registers the authenticated external electronic device in the external server.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. An electronic device comprising:
a microphone;
a communication circuit;
a memory; and
a processor operatively connected to the microphone, the communication circuit, and the memory,
wherein the memory stores one or more instructions that, when executed, cause the processor to:
receive an utterance through the microphone;
execute a function to detect a signal received from at least one external electronic device based on the utterance;
identify the at least one external electronic device based on the signal;
determine an external electronic device to be registered from among the at least one external electronic device based on device information included in the signal and device information extracted from the utterance;
authenticate the external electronic device to be registered, using voiceprint analysis on the utterance; and
register the authenticated external electronic device in an external server.

2. The electronic device of claim 1, wherein the instructions, when executed, cause the processor to:
determine whether the utterance includes a keyword for registering an external electronic device; and
based on determining that the utterance includes the keyword, execute the function to detect the signal.

3. The electronic device of claim 1, wherein each of the device information included in the signal and the device information extracted from the utterance includes a device type, and
wherein the instructions, when executed, cause the processor to:
determine whether a device type included in the signal matches a device type extracted from the utterance;
determine whether the at least one external electronic device is included in a device list registered in the external server; and
determine that an external electronic device, not included in the list, is the external electronic device to be registered.

4. The electronic device of claim 3, wherein the instructions, when executed, cause the processor to:
based on there being a plurality of external electronic devices not included in the list, determine a connection priority between the plurality of external electronic devices; and
establish a communication connection with one of the plurality of external electronic devices through the communication circuit based on the connection priority.

5. The electronic device of claim 4, wherein the instructions, when executed, cause the processor to:
establish a communication connection with an external electronic device having a highest connection priority.

6. The electronic device of claim 3, wherein the instructions, when executed, cause the processor to:
based on it being impossible to extract the device type from the utterance, omit an operation of determining whether a device type is matched;
generate a device list, to be registered and including an external electronic device not included in the registered device list;
based on there being a plurality of external electronic devices included in the device list to be registered, determine a connection priority between the plurality of external electronic devices; and
sequentially establish a communication connection with each of the plurality of external electronic devices based on the connection priority.

7. The electronic device of claim 1, wherein the instructions, when executed, cause the processor to:
establish a communication connection with the external electronic device, determined and to be registered, through the communication circuit;
receive information about voiceprint analysis on the utterance from the connected external electronic device;
obtain a first voiceprint based on the received information;
obtain a second voiceprint by performing the voiceprint analysis on the utterance; and
authenticate the connected external electronic device based on whether the first voiceprint is identical to the second voiceprint.

8. The electronic device of claim 7, wherein the received information includes audio data corresponding to the utterance received by the external electronic device through a microphone of the external electronic device or the first voiceprint obtained by the external electronic device through voiceprint analysis based on the audio data.

9. The electronic device of claim 7, wherein the instructions, when executed, cause the processor to:
based on the first voiceprint being identical to the second voiceprint, determine whether the utterance includes a keyword for registering an external electronic device; and
based on determining that the utterance includes the keyword, transmit encrypted personal information to the authenticated external electronic device.

10. The electronic device of claim 9, wherein the encrypted personal information includes information for Internet connection and is used such that the authenticated external electronic device is configured to register the authenticated external electronic device in the external server.

11. A method of operating an electronic device, the method comprising:
receiving an utterance;
executing a function to detect a signal received from at least one external electronic device based on the utterance;
identifying the at least one external electronic device based on the signal;
determining an external electronic device to be registered from among the at least one external electronic device based on device information included in the signal and device information extracted from the utterance;
authenticating the external electronic device to be registered, using voiceprint analysis on the utterance; and
registering the authenticated external electronic device in an external server.

12. The method of claim 11, further comprising:
determining whether the utterance includes a keyword for registering an external electronic device; and
based on determining that the utterance includes the keyword, executing the function to detect the signal.

13. The method of claim 11, wherein each of the device information included in the signal and the device information extracted from the utterance includes a device type,
the method further comprising:
determining whether a device type included in the signal matches a device type extracted from the utterance;
determining whether the at least one external electronic device is included in a device list registered in the external server; and
determining that an external electronic device, not included in the list, is the external electronic device to be registered.

14. The method of claim 13, further comprising:
based on there being a plurality of external electronic devices not included in the list, determining a connection priority between the plurality of external electronic devices; and
establishing a communication connection with one of the plurality of external electronic devices based on the connection priority.

15. The method of claim 13, further comprising:
based on it being impossible to extract the device type from the utterance, omitting an operation of determining whether a device type is matched,
generating a device list, to be registered and including an external electronic device not included in the registered device list;
based on there being a plurality of external electronic devices included in the device list to be registered, determining a connection priority between the plurality of external electronic devices; and
sequentially establishing a communication connection with each of the plurality of external electronic devices based on the connection priority.

## Patentansprüche

1. Elektronische Vorrichtung, die Folgendes umfasst:
ein Mikrofon;
eine Kommunikationsschaltung;
einen Speicher; und
einen Prozessor, der mit dem Mikrofon, der Kommunikationsschaltung und dem Speicher wirkverbunden ist,
wobei der Speicher eine oder mehrere Anweisungen speichert, die, wenn sie ausgeführt werden, den Prozessor zu Folgendem veranlassen:
Empfangen einer Äußerung über das Mikrofon;
Ausführen einer Funktion zum Erkennen eines von mindestens einer externen elektronischen Vorrichtung empfangenen Signals basierend auf der Äußerung;
Identifizieren der mindestens einen externen elektronischen Vorrichtung basierend auf dem Signal;
Bestimmen einer zu registrierenden externen elektronischen Vorrichtung aus der mindestens einen externen elektronischen Vorrichtung basierend auf in dem Signal enthaltenen Vorrichtungsinformationen und aus der Äußerung extrahierten Vorrichtungsinformationen;
Authentifizieren der zu registrierenden externen elektronischen Vorrichtung unter Verwendung einer Stimmabdruckanalyse der Äußerung; und
Registrieren der authentifizierten externen elektronischen Vorrichtung in einem externen Server.

2. Elektronische Vorrichtung nach Anspruch 1, wobei die Anweisungen, wenn sie ausgeführt werden, den Prozessor zu Folgendem veranlassen:
Bestimmen, ob die Äußerung ein Schlüsselwort zum Registrieren einer externen elektronischen Vorrichtung enthält; und
basierend auf dem Bestimmen, dass die Äußerung das Schlüsselwort enthält, Ausführen der Funktion zum Erkennen des Signals.

3. Elektronische Vorrichtung nach Anspruch 1, wobei die in dem Signal enthaltenen Vorrichtungsinformationen und die aus der Äußerung extrahierten Vorrichtungsinformationen jeweils einen Vorrichtungstyp enthalten, und
wobei die Anweisungen, wenn sie ausgeführt werden, den Prozessor zu Folgendem veranlassen:
Bestimmen, ob ein in dem Signal enthaltener Vorrichtungstyp mit einem aus der Äußerung extrahierten Vorrichtungstyp übereinstimmt;
Bestimmen, ob die mindestens eine externe elektronische Vorrichtung in einer in dem externen Server registrierten Vorrichtungsliste enthalten ist; und
Bestimmen, dass eine nicht in der Liste enthaltene externe elektronische Vorrichtung die zu registrierende externe elektronische Vorrichtung ist.

4. Elektronische Vorrichtung nach Anspruch 3, wobei die Anweisungen, wenn sie ausgeführt werden, den Prozessor zu Folgendem veranlassen:
basierend darauf, dass es eine Vielzahl von nicht in der Liste enthaltenen externen elektronischen Vorrichtungen gibt, Bestimmen einer Verbindungspriorität zwischen der Vielzahl von externen elektronischen Vorrichtungen; und
Herstellen einer Kommunikationsverbindung mit einer der Vielzahl von externen elektronischen Vorrichtungen über die Kommunikationsschaltung basierend auf der Verbindungspriorität.

5. Elektronische Vorrichtung nach Anspruch 4, wobei die Anweisungen, wenn sie ausgeführt werden, den Prozessor zu Folgendem veranlassen:
Herstellen einer Kommunikationsverbindung mit einer externen elektronischen Vorrichtung mit höchster Verbindungspriorität.

6. Elektronische Vorrichtung nach Anspruch 3, wobei die Anweisungen, wenn sie ausgeführt werden, den Prozessor zu Folgendem veranlassen:
basierend darauf, dass es unmöglich ist, den Vorrichtungstyp aus der Äußerung zu extrahieren, Auslassen eines Vorgangs zum Bestimmen, ob ein Vorrichtungstyp übereinstimmt;
Erzeugen einer zu registrierenden Vorrichtungsliste, die eine externe elektronische Vorrichtung enthält, die nicht in der registrierten Vorrichtungsliste enthalten ist;
basierend darauf, dass es eine Vielzahl von in der zu registrierenden Vorrichtungsliste enthaltenen externen elektronischen Vorrichtungen gibt, Bestimmen einer Verbindungspriorität zwischen der Vielzahl von externen elektronischen Vorrichtungen; und
sequentielles Herstellen einer Kommunikationsverbindung mit jeder der Vielzahl von externen elektronischen Vorrichtungen basierend auf der Verbindungspriorität.

7. Elektronische Vorrichtung nach Anspruch 1, wobei die Anweisungen, wenn sie ausgeführt werden, den Prozessor zu Folgendem veranlassen:
Herstellen einer Kommunikationsverbindung mit der bestimmten und zu registrierenden externen elektronischen Vorrichtung über die Kommunikationsschaltung;
Empfangen von Informationen über die Stimmabdruckanalyse der Äußerung von der angeschlossenen externen elektronischen Vorrichtung;
Erhalten eines ersten Stimmabdrucks basierend auf den empfangenen Informationen;
Erhalten eines zweiten Stimmabdrucks durch Ausführen der Stimmabdruckanalyse der Äußerung; und
Authentifizieren der angeschlossenen externen elektronischen Vorrichtung basierend darauf, ob der erste Stimmabdruck mit dem zweiten Stimmabdruck identisch ist.

8. Elektronische Vorrichtung nach Anspruch 7, wobei die empfangenen Informationen Audiodaten enthalten, die der Äußerung entsprechen, die von der externen elektronischen Vorrichtung über ein Mikrofon der externen elektronischen Vorrichtung empfangen wurde, oder den ersten Stimmabdruck, der von der externen elektronischen Vorrichtung durch Stimmabdruckanalyse basierend auf den Audiodaten erhalten wurde.

9. Elektronische Vorrichtung nach Anspruch 7, wobei die Anweisungen, wenn sie ausgeführt werden, den Prozessor zu Folgendem veranlassen:
basierend darauf, dass der erste Stimmabdruck mit dem zweiten Stimmabdruck identisch ist, Bestimmen, ob die Äußerung ein Schlüsselwort zum Registrieren einer externen elektronischen Vorrichtung enthält; und
basierend auf dem Bestimmen, dass die Äußerung das Schlüsselwort enthält, Übertragen verschlüsselter persönlicher Informationen an die authentifizierte externe elektronische Vorrichtung.

10. Elektronische Vorrichtung nach Anspruch 9, wobei die verschlüsselten persönlichen Informationen Informationen für die Internetverbindung enthalten und so verwendet werden, dass die authentifizierte externe elektronische Vorrichtung so konfiguriert ist, dass sie die authentifizierte externe elektronische Vorrichtung in dem externen Server registriert.

11. Verfahren zum Betreiben einer elektronischen Vorrichtung, wobei das Verfahren Folgendes umfasst:
Empfangen einer Äußerung;
Ausführen einer Funktion zum Erkennen eines von mindestens einer externen elektronischen Vorrichtung empfangenen Signals basierend auf der Äußerung;
Identifizieren der mindestens einen externen elektronischen Vorrichtung basierend auf dem Signal;
Bestimmen einer zu registrierenden externen elektronischen Vorrichtung aus der mindestens einen externen elektronischen Vorrichtung basierend auf in dem Signal enthaltenen Vorrichtungsinformationen und aus der Äußerung extrahierten Vorrichtungsinformationen;
Authentifizieren der zu registrierenden externen elektronischen Vorrichtung unter Verwendung der Stimmabdruckanalyse der Äußerung; und
Registrieren der authentifizierten externen elektronischen Vorrichtung in einem externen Server.

12. Verfahren nach Anspruch 11, das ferner Folgendes umfasst:
Bestimmen, ob die Äußerung ein Schlüsselwort zum Registrieren einer externen elektronischen Vorrichtung enthält; und
basierend auf dem Bestimmen, dass die Äußerung das Schlüsselwort enthält, Ausführen der Funktion zum Erkennen des Signals.

13. Verfahren nach Anspruch 11, wobei die in dem Signal enthaltenen Vorrichtungsinformationen und die aus der Äußerung extrahierten Vorrichtungsinformationen jeweils einen Vorrichtungstyp enthalten,
wobei das Verfahren ferner Folgendes umfasst:
Bestimmen, ob ein in dem Signal enthaltener Vorrichtungstyp mit einem aus der Äußerung extrahierten Vorrichtungstyp übereinstimmt;
Bestimmen, ob die mindestens eine externe elektronische Vorrichtung in einer in dem externen Server registrierten Vorrichtungsliste enthalten ist; und
Bestimmen, dass eine nicht in der Liste enthaltene externe elektronische Vorrichtung die zu registrierende externe elektronische Vorrichtung ist.

14. Verfahren nach Anspruch 13, das ferner Folgendes umfasst:
basierend darauf, dass es eine Vielzahl von nicht in der Liste enthaltenen externen elektronischen Vorrichtungen gibt, Bestimmen einer Verbindungspriorität zwischen der Vielzahl von externen elektronischen Vorrichtungen; und
Herstellen einer Kommunikationsverbindung mit einer der Vielzahl von externen elektronischen Vorrichtungen basierend auf der Verbindungspriorität.

15. Verfahren nach Anspruch 13, das ferner Folgendes umfasst:
basierend darauf, dass es unmöglich ist, den Vorrichtungstyp aus der Äußerung zu extrahieren, Auslassen eines Vorgangs zum Bestimmen, ob ein Vorrichtungstyp übereinstimmt,
Erzeugen einer zu registrierenden Vorrichtungsliste, die eine nicht in der registrierten Vorrichtungsliste enthaltene externe elektronische Vorrichtung enthält;
basierend darauf, dass es eine Vielzahl von in der zu registrierenden Vorrichtungsliste enthaltenen externen elektronischen Vorrichtungen gibt, Bestimmen einer Verbindungspriorität zwischen der Vielzahl von externen elektronischen Vorrichtungen; und
sequentielles Herstellen einer Kommunikationsverbindung mit jeder der Vielzahl von externen elektronischen Vorrichtungen basierend auf der Verbindungspriorität.

## Revendications

1. Dispositif électronique comprenant :
un microphone ;
un circuit de communication ;
une mémoire ; et
un processeur connecté de manière opérationnelle au microphone, au circuit de communication et à la mémoire,
où la mémoire stocke une ou plusieurs instructions qui, lorsqu'elles sont exécutées, amènent le processeur à :
recevoir un énoncé par l'intermédiaire du microphone ;
exécuter une fonction pour détecter un signal reçu d'au moins un dispositif électronique externe sur la base de l'émission vocale ;
identifier l'au moins un dispositif électronique externe sur la base du signal ;
déterminer un dispositif électronique externe à enregistrer parmi l'au moins un dispositif électronique externe sur la base des informations de dispositif incluses dans le signal et des informations de dispositif extraites de l'énoncé ;
authentifier le dispositif électronique externe à enregistrer, à l'aide d'une analyse d'empreinte vocale sur l'énoncé ; et
enregistrer le dispositif électronique externe authentifié dans un serveur externe.

2. Dispositif électronique selon la revendication 1, où les instructions, lorsqu'elles sont exécutées, amènent le processeur à :
déterminer si l'énoncé inclut un mot-clé pour enregistrer un dispositif électronique externe ; et
sur la base de la détermination que l'énoncé inclut le mot-clé, exécuter la fonction pour détecter le signal.

3. Dispositif électronique selon la revendication 1, où chacune des informations de dispositif incluses dans le signal et les informations de dispositif extraites de l'énoncé incluent un type de dispositif, et
où les instructions, lorsqu'elles sont exécutées, amènent le processeur à :
déterminer si un type de dispositif inclus dans le signal correspond à un type de dispositif extrait de l'énoncé ;
déterminer si l'au moins un dispositif électronique externe est inclus dans une liste de dispositifs enregistrée dans le serveur externe ; et
déterminer qu'un dispositif électronique externe, non inclus dans la liste, est le dispositif électronique externe à enregistrer.

4. Dispositif électronique selon la revendication 3, où les instructions, lorsqu'elles sont exécutées, amènent le processeur à :
sur la base de l'existence d'une pluralité de dispositifs électroniques externes non inclus dans la liste, déterminer une priorité de connexion entre la pluralité de dispositifs électroniques externes ; et
établir une connexion de communication avec l'un de la pluralité de dispositifs électroniques externes par l'intermédiaire du circuit de communication sur la base de la priorité de connexion.

5. Dispositif électronique selon la revendication 4, où les instructions, lorsqu'elles sont exécutées, amènent le processeur à :
établir une connexion de communication avec un dispositif électronique externe ayant la priorité de connexion la plus élevée.

6. Dispositif électronique selon la revendication 3, où les instructions, lorsqu'elles sont exécutées, amènent le processeur à :
sur la base de l'impossibilité d'extraire le type de dispositif de l'énoncé, omettre une opération consistant à déterminer si un type de dispositif correspond ;
générer une liste de dispositifs, à enregistrer et incluant un dispositif électronique externe non inclus dans la liste de dispositifs enregistrés ;
sur la base de l'existence d'une pluralité de dispositifs électroniques externes inclus dans la liste de dispositifs à enregistrer, déterminer une priorité de connexion entre la pluralité de dispositifs électroniques externes ; et
établir séquentiellement une connexion de communication avec chacun de la pluralité de dispositifs électroniques externes sur la base de la priorité de connexion.

7. Dispositif électronique selon la revendication 1, où les instructions, lorsqu'elles sont exécutées, amènent le processeur à :
établir une connexion de communication avec le dispositif électronique externe, déterminé et à enregistrer, par l'intermédiaire du circuit de communication ;
recevoir des informations sur l'analyse d'empreinte vocale de l'énoncé provenant du dispositif électronique externe connecté ;
obtenir une première empreinte vocale sur la base des informations reçues ;
obtenir une deuxième empreinte vocale en effectuant l'analyse d'empreinte vocale de l'énoncé ; et
authentifier le dispositif électronique externe connecté en fonction de si la première empreinte vocale est identique à la deuxième empreinte vocale.

8. Dispositif électronique selon la revendication 7, où les informations reçues incluent des données audio correspondant à l'énoncé reçu par le dispositif électronique externe par l'intermédiaire d'un microphone du dispositif électronique externe ou la première empreinte vocale obtenue par le dispositif électronique externe par l'intermédiaire de l'analyse d'empreinte vocale sur la base des données audio.

9. Dispositif électronique selon la revendication 7, où les instructions, lorsqu'elles sont exécutées, amènent le processeur à :
sur la base du fait que la première empreinte vocale est identique à la deuxième empreinte vocale, déterminer si l'énoncé inclut un mot-clé permettant d'enregistrer un dispositif électronique externe ; et
sur la base de la détermination que l'énoncé inclut le mot-clé, transmettre des informations personnelles cryptées au dispositif électronique externe authentifié.

10. Dispositif électronique selon la revendication 9, où les informations personnelles cryptées incluent des informations pour la connexion Internet et sont utilisées de telle sorte que le dispositif électronique externe authentifié est configuré pour enregistrer le dispositif électronique externe authentifié dans le serveur externe.

11. Procédé de fonctionnement d'un dispositif électronique, le procédé comprenant :
recevoir un énoncé ;
exécuter une fonction pour détecter un signal reçu d'au moins un dispositif électronique externe sur la base de l'énoncé ;
identifier l'au moins un dispositif électronique externe sur la base du signal ;
déterminer un dispositif électronique externe à enregistrer parmi l'au moins un dispositif électronique externe sur la base des informations de dispositif incluses dans le signal et des informations de dispositif extraites de l'énoncé ;
authentifier le dispositif électronique externe à enregistrer, à l'aide d'une analyse d'empreinte vocale sur l'énoncé ; et
enregistrer le dispositif électronique externe authentifié dans un serveur externe.

12. Procédé selon la revendication 11, comprenant en outre :
déterminer si l'énoncé inclut un mot-clé pour enregistrer un dispositif électronique externe ; et
sur la base de la détermination que l'énoncé inclut le mot-clé, exécuter la fonction pour détecter le signal.

13. Procédé selon la revendication 11, où chacune des informations de dispositif incluses dans le signal et les informations de dispositif extraites de l'énoncé incluent un type de dispositif,
le procédé comprenant en outre :
déterminer si un type de dispositif inclus dans le signal correspond à un type de dispositif extrait de l'énoncé ;
déterminer si l'au moins un dispositif électronique externe est inclus dans une liste de dispositifs enregistrée dans le serveur externe ; et
déterminer qu'un dispositif électronique externe, non inclus dans la liste, est le dispositif électronique externe à enregistrer.

14. Procédé selon la revendication 13, comprenant en outre :
sur la base de l'existence d'une pluralité de dispositifs électroniques externes non inclus dans la liste, déterminer une priorité de connexion entre la pluralité de dispositifs électroniques externes ; et
établir une connexion de communication avec l'un de la pluralité de dispositifs électroniques externes sur la base de la priorité de connexion.

15. Procédé selon la revendication 13, comprenant en outre :
sur la base de l'impossibilité d'extraire le type de dispositif à partir de l'énoncé, omettre une opération consistant à déterminer si un type de dispositif correspond,
générer une liste de dispositifs à enregistrer et incluant un dispositif électronique externe non inclus dans la liste de dispositifs enregistrés ;
sur la base de l'existence d'une pluralité de dispositifs électroniques externes inclus dans la liste de dispositifs à enregistrer, déterminer une priorité de connexion entre la pluralité de dispositifs électroniques externes ; et
établir séquentiellement une connexion de communication avec chacun de la pluralité de dispositifs électroniques externes sur la base de la priorité de connexion.
